(19) Europäisches Patentamt / European Patent Office / Office européen des brevets

(11) **EP 4 442 669 A1**

(12) **EUROPEAN PATENT APPLICATION**

(43) Date of publication:
**09.10.2024 Bulletin 2024/41**

(21) Application number: **24158764.1**

(22) Date of filing: **21.02.2024**

(51) International Patent Classification (IPC):
**C04B 35/117** (2006.01)   **C04B 35/44** (2006.01)
**C04B 35/638** (2006.01)   **C04B 35/64** (2006.01)
**C09K 11/08** (2006.01)   **C04B 35/01** (2006.01)

(52) Cooperative Patent Classification (CPC):
**C04B 35/64; C04B 35/01; C04B 35/117;**
**C04B 35/44; C04B 35/638; C09K 11/0838;**
C04B 2235/3217; C04B 2235/3224;
C04B 2235/3225; C04B 2235/3227;
C04B 2235/3229; C04B 2235/3286;
C04B 2235/5409; C04B 2235/602; C04B 2235/604;

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.02.2023 JP 2023030183**

(71) Applicant: **Nichia Corporation**
**Anan-shi, Tokushima 774-8601 (JP)**

(72) Inventors:
• **YAMAMOTO, Ryo**
  **Tokushima, 774-8601 (JP)**
• **TAKETOMI, Shozo**
  **Tokushima, 774-8601 (JP)**

(74) Representative: **Vossius & Partner**
**Patentanwälte Rechtsanwälte mbB**
**Siebertstrasse 3**
**81675 München (DE)**

(54) **METHOD FOR PRODUCING SINTERED BODY AND SINTERED BODY**

(57)   A method for producing a sintered body includes: providing a raw material mixture containing oxide particles containing Ce, Al, Ga, optionally Sc, and a rare earth element $R^1$ being at least one selected from the group consisting of Y, La, Gd, and Tb to obtain a target composition, wherein a total molar ratio of $R^1$ and Ce is 3, and a molar ratio of Ce, a total molar ratio of Al, Ga, and Sc, a molar ratio of Al and a molar ratio of the Ga are as described in the disclosure; molding the raw material mixture to obtain a molded body; and calcining the molded body to obtain a sintered body containing a rare earth aluminate crystal phase and 2.7% by volume or more to 57.0% by volume or less of an aluminum oxide phase.

EP 4 442 669 A1

(52) Cooperative Patent Classification (CPC): (Cont.)
    C04B 2235/664; C04B 2235/764; C04B 2235/77;
    C04B 2235/781; C04B 2235/785;
    C04B 2235/786; C04B 2235/80;
    C04B 2235/9646; C04B 2235/9653;
    C04B 2235/9661

**Description**

CROSS-REFERENCE TO RELATED PATENT APPLICATION

This application claims priority to Japanese Patent Application No. 2023-030183, filed on February 28, 2023, the disclosure of which is hereby incorporated by reference in its entirety.

BACKGROUND

Technical Field

The present disclosure relates to a method for producing a sintered body, and a sintered body.

Description of Related Art

There are known light emitting devices provided with a light emitting diode (LED) or a laser diode (LD) and a wavelength conversion member containing a fluorescent material that converts a wavelength of light emitted from the LED or LD. Such light emitting devices are used for applications such as on-vehicle lighting, general lighting, backlights for liquid crystal display devices, and light sources for projectors.

As a wavelength conversion member provided on a light emitting device, for example, Japanese Unexamined Patent Publication No. 2017-197774 discloses a single-phase ceramic conversion member obtained by sintering a fluorescent raw material containing an oxide.

One object of the present disclosure is to provide a method for producing a sintered body that can emit light having a desired color, high luminous flux, and light extraction efficiency while maintaining illumination efficiency.

SUMMARY

According to a first aspect of the present disclosure, a method for producing a sintered body includes: providing a raw material mixture containing: oxide particles containing a rare earth element $R^1$ being at least one element selected from the group consisting of Y, La, Gd, and Tb, Ce-containing oxide particles containing Ce, Al-containing oxide particles containing Al, Ga-containing oxide particles containing Ga, and optionally Sc-containing oxide particles containing Sc to obtain a target composition in which a total molar ratio of the rare earth element $R^1$ and Ce is 3, a molar ratio of the Ce is a product of 3 and a parameter m, the parameter m being 0.001 or more and 0.017 or less, a total molar ratio of Al, Ga, and the optionally contained Sc is a parameter k, the parameter k being more than 5.25 and less than 19, a molar ratio of Al is a product of a parameter p and the parameter k, the parameter p being 0.61 or more and 0.90 or less, and a molar ratio of Ga is a product of a parameter n and the parameter k, the parameter n being 0.10 or more and 0.39 or less; molding the raw material mixture to obtain a molded body; and calcining the molded body at a temperature of 1,300°C or higher and 1,800°C or lower to obtain a sintered body containing a rare earth aluminate crystal phase and an aluminum oxide phase, wherein the sintered body contains 2.7% by volume or more and 57.0% by volume or less of the aluminum oxide phase.

According to a second aspect of the present disclosure, a sintered body contains a rare earth element $R^1$ being at least one selected from the group consisting of Y, La, Gd, and Tb; Ce; Al; Ga; and optionally Sc, the sintered body comprising a rare earth aluminate crystal phase and an aluminum oxide phase. The sintered body contains 13% by mass or more and 23% by mass or less of the Ga relative to a total mass of the sintered body. The sintered body contains 2.7% by volume or more and 57.0% by volume or less of the aluminum oxide phase relative to a total volume of the sintered body.

Certain aspects of the present disclosure allows for providing a method for producing a sintered body that can emit light having a desired color and high luminous flux and has light extraction efficiency while maintaining illumination efficiency and the sintered body.

BRIEF DESCRIPTION OF THE DRAWINGS

FIG. 1 is a flowchart describing an example of a method for producing a sintered body according to the present disclosure.
FIG. 2 is a diagram illustrating a schematic configuration showing an exemplary light emitting device.
FIG. 3 is a plan view illustrating a schematic configuration showing an exemplary fluorescent material device.

FIG. 4 is a side view illustrating a schematic configuration of the exemplary fluorescent material device in FIG. 3.

FIG. 5 is a scanning electron microscope (SEM) micrograph of a sintered body according to Example 1.

FIG. 6 is an SEM micrograph of a sintered body according to Example 3.

FIG. 7 is an SEM micrograph of a sintered body according to Example 5.

FIG. 8 is an SEM micrograph of a sintered body according to Example 8.

FIG. 9 is an SEM micrograph of a sintered body according to Comparative Example 2.

DETAILED DESCRIPTION

The method for producing a sintered body and the sintered body according to the present disclosure are described below based on embodiments. The embodiments described below are exemplifications for giving a concrete form to the technical idea of the present disclosure, and the present disclosure is not limited to the following method for producing a sintered body and the sintered body. The relationships between color names and chromaticity coordinates, and the relationships between wavelength ranges of light and color names of monochromatic lights in the present specification are in accordance with Japanese Industrial Standard (JIS) Z8110. In the present specification, unless otherwise specified, in the case where a plurality of substances corresponding to each component are present in a composition, the content of each component in the composition means a total amount of the plurality of substances present in the composition. In the present specification, the full width at half maximum (FWHM) refers to a width of a wavelength at 50% intensity of the light emission intensity at the light emission peak wavelength, at which the maximum light emission intensity is exhibited, in the light emission spectrum. In this specification, the "fluorescent material" is used in the same meaning as a "fluorescent phosphor."

The method for producing a sintered body includes: providing a raw material mixture that contains oxide particles containing a rare earth element $R^1$ being at least one element selected from the group consisting of Y, La, Gd, and Tb, Ce-containing oxide particles containing Ce, Al-containing oxide particles containing Al, and Ga-containing oxide particles containing Ga, and optionally Sc-containing oxide particles containing Sc to obtain a target composition in which a total molar ratio of the rare earth element $R^1$ and the Ce is 3, a molar ratio of the Ce is a product of 3 and a parameter m, the parameter m being 0.001 or more and 0.017 or less, a total molar ratio of the Al, the Ga, and the optionally contained Sc is a parameter k, the parameter k being more than 5.25 and less than 19, a molar ratio of the Al is a product of a parameter p and the parameter k, the parameter p being 0.61 or more and 0.90 or less, and a molar ratio of the Ga is a product of a parameter n and the parameter k, the parameter n being 0.10 or more and 0.39 or less; molding the raw material mixture to obtain a molded body; and calcining the molded body at a temperature of 1,300°C or higher and 1,800°C or lower to obtain a sintered body containing a rare earth aluminate crystal phase and 2.7% by volume or more and 57.0% by volume or less of an aluminum oxide phase.

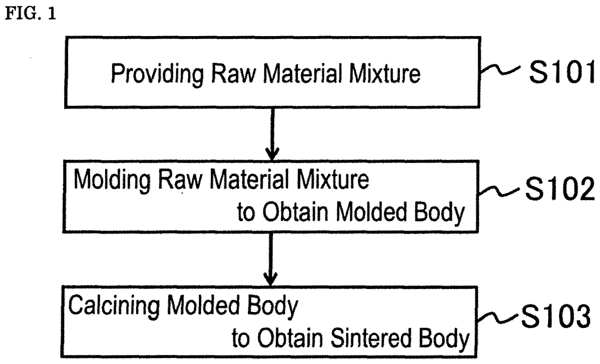

FIG. 1 shows a flowchart describing an example of the method for producing a sintered body. The method for producing a sintered body includes providing a raw material mixture (S101), molding the raw material mixture to obtain a molded body (S102), and calcining the molded body to obtain a sintered body (S103).

The sintered body obtained by calcining the raw material mixture has an yttrium aluminum garnet structure. In providing the raw material mixture, the raw material mixture contains Ce at a predetermined ratio to obtain a molar ratio expressed as a product of 3 and a parameter m being 0.001 or more and 0.017 or less in the charge composition, so that the resulting sintered body contains Ce as an activating element in the rare earth aluminate crystal phase. When the sintered body obtained by calcining the raw material mixture containing Ce as an activating element is irradiated with light having an energy density of 34.0 $W/mm^2$ and a light emission peak wavelength of 450 nm, the sintered body emits light having a wavelength converted from that of the irradiated light and having a light emission spectrum with a light emission peak wavelength of 500 nm or more and less than 650 nm. The rare earth aluminate crystal phase in the sintered body contains Ce as an activating element, so that a rare earth aluminate fluorescent material crystal phase can be obtained. In the present specification, the rare earth aluminate fluorescent material crystal phase is also referred to as the rare earth aluminate crystal phase.

In providing the raw material mixture, the raw material mixture contains Al at a predetermined ratio to obtain a target composition in which a molar ratio of Al is expressed as a product of a parameter p, the parameter p being 0.61 or more and 0.90 or less, and a parameter k, the parameter k being more than 5.25 and less than 19, in the charge composition, so that a rare earth aluminate crystal phase having an yttrium aluminum garnet structure is formed in the sintered body obtained by calcining the raw material mixture. In the composition obtained from the raw material mixture, excess Al in the Al contained in the raw material mixture that exceeds the Al required to form a rare earth aluminate crystal phase having an yttrium aluminum garnet structure forms an aluminum oxide phase together with oxygen.

In providing the raw material mixture, the raw material mixture contains Ga at a predetermined ratio to obtain a target composition in which a molar ratio of Ga is expressed as a product of a parameter n of 0.10 or more and 0.39 or less and the parameter k. Accordingly, even if lutetium (Lu) is not contained in the composition as the rare earth element $R^1$, a rare earth aluminate crystal phase that emits light having a light emission peak wavelength similar to that of the case containing lutetium (Lu) as the rare earth element $R^1$ can be obtained. The raw material mixture contains Ga at a predetermined ratio to obtain a target composition in which a molar ratio of Ga is expressed as a product of a parameter n of 0.10 or more and 0.39 or less and the parameter k. This allows for having a distorted crystal structure compared to the case where Ga is not contained and, even if lutetium (Lu) is not contained as the rare earth element $R^1$, obtaining a rare earth aluminate crystal phase that emits light having a light emission peak wavelength shifted to the short wavelength side when irradiated with the excitation light. The price of lutetium is higher than, for example, the price of yttrium. Therefore, a sintered body containing a rare earth aluminate crystal phase that emits light having a color similar to that of light emitted from a rare earth aluminate crystal phase containing lutetium in the composition can be obtained at low cost without using lutetium. The raw material mixture may contain lutetium at a predetermined ratio such that, in a target composition, the molar ratio of lutetium in the rare earth aluminate crystal phase is 0.3 or less, and when it contains lutetium, the molar ratio of lutetium may be 0.003 or more.

In providing the raw material mixture, the raw material mixture is preferably prepared such that a target composition is represented by the following formula (I):

$$(R^1_{1-m}Ce_m)_3(Al_pGa_nSc_q)_kO_{4.5+1.5k} \qquad (I),$$

wherein $R^1$ represents at least one selected from Y, La, Gd, and Tb, and k, m, n, p, and q satisfy $5.25 < k < 19$, $0.001 \leq m \leq 0.017$, $0.10 \leq n \leq 0.39$, $0.61 \leq p \leq 0.90$, $0 \leq q \leq 0.02$, and $p+n+q = 1$..

The raw material mixture may be provided to obtain a target composition in which, among the parameters k and m representing the molar ratio of Ce, the parameter m is 0.002 or more and 0.016 or less ($0.002 \leq m \leq 0.016$), or is 0.003 or more and 0.015 or less ($0.003 \leq m \leq 0.015$).

The raw material mixture may be provided to obtain a target composition in which, among the parameters p and k representing the molar ratio of Al, the parameter p is 0.61 or more and 0.89 or less ($0.61 \leq p \leq 0.89$), is 0.62 or more and 0.89 or less ($0.62 \leq p \leq 0.89$), or is 0.62 or more and 0.85 or less ($0.62 \leq p \leq 0.85$). The raw material mixture may be provided to obtain a target composition in which, among the parameters n and k representing the molar ratio of Ga, the parameter n is 0.11 or more and 0.39 or less ($0.11 \leq n \leq 0.39$), or is 0.11 or more and 0.38 or less ($0.11 \leq n \leq 0.38$). The raw material mixture may be provided to obtain a target composition in which, among the parameters q and k representing the molar ratio of Sc, the parameter q is 0.001 or more and 0.02 or less ($0.001 \leq q \leq 0.02$), or is 0.005 or more and 0.02 or less ($0.005 \leq q \leq 0.02$). The raw material mixture may be provided to obtain a target composition in which the parameter k is 5.26 or more and 16.5 or less ($5.26 \leq k \leq 16.5$), is 5.3 or more and 16 or less ($5.3 \leq k \leq 16$), is 15 or less ($k \leq 15$), is 12 or less ($k \leq 12$), or is 10 or less ($k \leq 10$).

In providing the raw material mixture, specific examples of the oxide particles containing a rare earth element $R^1$ being at least one selected from the group consisting of Y, La, Gd, and Tb include yttrium oxide particles, lanthanum oxide particles, gadolinium oxide particles, and terbium oxide particles. Other examples of the oxide particles include cerium oxide particles, aluminum oxide particles, gallium oxide particles, and scandium oxide particles.

In providing the raw material mixture, the specific surface area of the oxide particles containing a rare earth element $R^1$, the specific surface area of the Ce-containing oxide particles, the specific surface area of the Al-containing oxide particles, the specific surface area of the Ga-containing oxide particles, and the specific surface area of the Sc-containing oxide particles, are preferably 1.0 m$^2$/g or more and 130.0 m$^2$/g or less as measured by a BET method. When the specific surface area of the oxide particles containing a rare earth element $R^1$, the specific surface area of the Ce-containing oxide particles, the specific surface area of the Al-containing oxide particles, the specific surface area of the Ga-containing oxide particles, and the specific surface area of the Sc-containing oxide particles as raw materials are 1.0 m$^2$/g or more and 130 m$^2$/g or less as measured by a BET method, uniform mixing of respective oxide particles can be facilitated to obtain a raw material mixture in which respective oxide particles are uniformly dispersed. If respective oxide particles as raw materials can be uniformly mixed, a sintered body in which the rare earth aluminate crystal phase and the aluminum oxide phase are uniformly dispersed can be easily obtained. The specific surface area of the oxide particles containing a rare earth element $R^1$, the specific surface area of the Ce-containing oxide particles, the specific surface area of the Al-containing oxide particles, the specific surface area of the Ga-containing oxide particles, and the specific surface area of the optionally contained Sc-containing oxide particles may be 125 m$^2$/g or less, may be 120 m$^2$/g or less, or may be 100 m$^2$/g or less; and may be 10 m$^2$/g or more, may be 20 m$^2$/g or more, may be 30 m$^2$/g or more, may be 40 m$^2$/g or more, or may be 50 m$^2$/g or more as measured by a BET method.

In providing the raw material mixture, when the specific surface area of the oxide particles containing a rare earth element $R^1$, the specific surface area of the Ce-containing oxide particles, the specific surface area of the Al-containing oxide particles, the specific surface area of the Ga-containing oxide particles, and the specific surface area of the Sc-containing oxide particles are 1.0 m$^2$/g or more and 130.0 m$^2$/g or less as measured by a BET method, respective oxide particles are uniformly dispersed in the raw material mixture. Therefore, in obtaining the sintered body, a sintered body containing an aluminum oxide phase having an absolute maximum length of 0.01 μm or more and less than 10.0 μm, and a rare earth aluminate crystal phase having an absolute maximum length of 0.01 μm or more and

less than 10.0 pm, as measured under the following measurement condition, on a surface or a cross section of the sintered body, can be obtained.

Measurement Condition

The absolute maximum length is measured as a distance between two most distant points of the contour of an aluminum oxide phase or a rare earth aluminate crystal phase included in a measurement range on the surface or the cross section of the sintered body.

The oxide particles containing a rare earth element $R^1$, the Ce-containing oxide particles, the Al-containing oxide particles, the Ga-containing oxide particles, and the optionally contained Sc-containing oxide particles may be mixed with a liquid to obtain a raw material mixture in a form of a slurry. Respective oxide particles as raw materials can be uniformly dispersed by mixing with a liquid, so that a sintered body can be produced in which the rare earth aluminate crystal phase and the aluminum oxide phase are substantially uniformly disposed. Examples of the liquid for dispersing respective oxide particles as raw materials include deionized water, water, and ethanol. The amount of the liquid is preferably 10 parts by mass or more and 200 parts by mass or less, and may be 50 parts by mass or more and 150 parts by mass, relative to 100 parts by mass of the total amount of the $R^1$-containing oxide particles, the Ce-containing oxide particles, the Al-containing oxide particles, the Ga-containing oxide particles, and the optionally contained Sc-containing oxide particles.

The raw material mixture in the form of a slurry may contain a dispersant to improve dispersibility. Examples of the dispersant used include organic dispersants, such as a cationic dispersant, an anionic dispersant, and a nonionic dispersant. When a dispersant is added to the raw material mixture, the amount of the dispersant is preferably an amount that allows the dispersant to be volatilized by thermal degreasing or calcining as described below, and may be 10% by mass or less, may be 5% by mass or less, or may be 3% by mass or less, relative to 100% by mass of the total amount of the oxide particles containing a rare earth element $R^1$, the Ce-containing oxide particles, the Al-containing oxide particles, the Ga-containing oxide particles, and the optionally contained Sc-containing oxide particles.

The providing of the raw material mixture may include stirring of the resulting raw material mixture in a form of a slurry. The raw material mixture in a form of a slurry is preferably stirred at a stirring speed of 20 rpm or more and 250 rpm or less for 2 hours or more and 40 hours or less. By uniformly mixing the raw material mixture in a form of a slurry, each of the oxide particles can be uniformly dispersed, which allows for producing a sintered body in which the rare earth aluminate crystal phase and the aluminum oxide phase are substantially uniformly dispersed.

The method for producing a sintered body may include drying to dry the resulting raw material mixture in a form of a slurry to obtain a raw material mixture powder. The drying temperature is preferably 50°C or higher and 150°C or lower, and the drying time is preferably 1 hour or more and 20 hours or less. Drying the raw material mixture in a form of a slurry in which the raw materials are uniformly mixed allows a raw material mixture powder to be obtained in which the raw materials are uniformly mixed.

The method for producing a sintered body may include dry pulverization-mixing, in which the raw material mixture powder are pulverized and mixed. Dry pulverization-mixing is preferably performed for 5 minutes or more and 1 hour or less using, for example, a ball mill. The particles in the raw material mixture powder need not all be pulverized, and only a portion of them may be pulverized for mixing. Performing dry pulverization-mixing reduces agglomeration of particles in the raw material mixture.

The method for producing a sintered body includes molding the resulting raw material mixture powder to obtain a molded body. For molding the raw material mixture powder, known methods such as a press molding method can be employed. Examples of the press molding method include a die press molding method and a cold isostatic pressing (CIP) method for which the term is defined in No. 2109 of JIS Z2500:2000. Alternatively, it may be molded by uniaxial compression. Two types of molding methods may be adopted to shape the molded body. For example, CIP may be performed after die press molding, or CIP may be performed after uniaxial compression by a roller bench method. For CIP, the molded body is preferably pressed by a cold isostatic pressing method using water as the medium.

The pressure in die press molding or in molding by uniaxial compression is preferably 5 MPa or more and 50 MPa or less, and more preferably 5 MPa or more and 30 MPa or less. When the pressure in die press molding or in molding by uniaxial compression falls within the above range, the molded body can be formed into a desired shape.

The pressure in CIP is preferably 50 MPa or more and 200 MPa or less, and more preferably 50 MPa or more and 180 MPa or less. When the pressure in CIP is 50 MPa or more and 200 MPa or less, a molded body can be formed, from which a rare earth aluminate sintered body having a relative density of 90% or more and a void ratio of 1% or more and 10% or less can be obtained by calcination.

The method for producing a sintered body may include heating the molded body to remove dispersants to degrease the molded body. When degreasing by heating, the method preferably includes heating the molded body at a temperature of 500°C or higher and 1,000°C or lower in an atmosphere containing air or nitrogen. By heating the molded body at a temperature of 500°C or higher and 1,000°C or lower in an atmosphere containing air or nitrogen, the amount of carbon contained in the molded body is reduced, and a decrease in luminous flux due to carbon inclusion can be suppressed.

The method for producing a sintered body includes calcining the resulting molded body at a temperature of 1,300°C or higher and 1,800°C or lower to obtain a sintered body. The calcining temperature of the molded body is 1,300°C or higher and 1,800°C or lower, preferably 1,400°C or higher and 1,790°C or lower, and more preferably 1,450°C or higher and 1,780°C or lower. When the calcining temperature is 1,300°C or higher, respective oxide particles in the uniformly mixed raw material mixture reacts to obtain a sintered body in which the rare earth aluminate crystal phase and the aluminum oxide phase are substantially uniformly dispersed.

The molded body is preferably calcined under an oxygen-containing atmosphere. The oxygen content in the atmosphere is preferably 5% by volume or more, more preferably 10% by volume or more, and even more preferably 15% by volume or more. The molded body may be calcined under an air atmosphere (oxygen content of 20% by volume or more). In an atmosphere having an oxygen content of less than 1% by volume, the surfaces of oxides are not easily dissolved, so that there may be a case in which formation of a crystal structure having a composition of rare earth aluminate caused by dissolve of the oxides with each other does not easily occur, leading to difficulty in formation of a sintered body having voids. The oxygen content in the atmosphere may be measured, for example, by the amount of oxygen flowing into the calcining apparatus, and may be measured at a temperature of 20°C and atmospheric pressure (101.325 kPa).

The method for producing a sintered body may include annealing the resulting sintered body in a reducing atmosphere. By annealing the resulting sintered body in a reducing atmosphere, cerium, which is an oxidized activation element contained in the crystal phase in the sintered body, is reduced, and a decrease in wavelength conversion efficiency and a decrease in luminous efficiency can be suppressed in each crystal phase. The reducing atmosphere may be an atmosphere containing at least one rare gas selected from the group consisting of helium, neon, and argon, or a nitrogen gas, and a hydrogen gas or a carbon monoxide gas, and the atmosphere preferably contains at least argon or a nitrogen gas, and a hydrogen gas or a carbon monoxide gas. The annealing may be performed after processing.

The annealing temperature is lower than the calcining temperature, and is preferably 1,000°C or higher and 1,600°C or lower. The annealing temperature is more preferably 1,100°C or higher and 1,400°C or lower. When the annealing temperature is lower than the calcining temperature and falls within the range of 1,000°C or higher and 1,600°C or lower, cerium, which is an oxidized activation element contained in the crystal phase in the sintered body, is reduced without reducing the voids in the sintered body, and a decrease in wavelength conversion efficiency and a decrease in luminous efficiency can be suppressed.

The method for producing a sintered body may include processing of cutting the resulting sintered body into a desired size or thickness. Known methods can be used for the cutting method, and examples thereof include blade dicing, laser dicing, and cutting methods using a wire saw.

The method for producing a sintered body may include surface-treating the resulting sintered body. Surface treatment is performed on the surface of the resulting sintered body or a cut product obtained by cutting the sintered body. With this surface treatment, the light emission of the rare earth aluminate crystal phase contained in the sintered body can be in an appropriate state, and the sintered body can be formed into a desired shape, size, or thickness. The surface treatment may be performed prior to processing of cutting the sintered body to a desired size or thickness, or may be performed after the processing. Examples of the surface treatment method include a sand-blasting method, a mechanical grinding method, a dicing method, and a chemical etching method.

Whether or not the raw material mixture contains a rare earth element $R^1$, Ce, Al, and Ga at predetermined ratios that allows the resulting sintered body to have a composition in which the total molar ratio of the rare earth element $R^1$ and the Ce is 3, the molar ratio of the Ce is a product of 3 and a parameter m, the parameter m being 0.001 or more and 0.017 or less, the total molar ratio of the Al, the Ga, and the optionally contained Sc is a parameter k being more than 5.25 and less than 19, the molar ratio of the Al is a product of a parameter p, being 0.61 or more and 0.90 or less, and the parameter k, and the molar ratio of the Ga is a product of a parameter n, being 0.10 or more and 0.39 or less, and the parameter k can be confirmed as follows: the resulting sintered body is melted in an alkaline solution and then heated and dissolved in a hydrochloric acid solution; and the sintered body dissolved in the hydrochloric acid solution is subjected to compositional analysis to measure the amounts of the rare earth element $R^1$, the Ce, the Al, the Ga, and the optionally contained Sc using an inductively coupled plasma atomic emission spectrometer (ICP-AES) (for example, Optima 8300, manufactured by PerkinElmer Inc.). Examples of the alkaline solution include an ammonia solution. The concentration of, for example, ammonia in the alkaline solution and the concentration of hydrochloric acid in the hydrochloric acid solution can be adjusted, as appropriate, to the amount that allows the sintered body to be melted and/or dissolved. The temperature at which the sintered body is dissolved in the hydrochloric acid solution may be, for example, 40°C or higher and 100°C or lower.

The resulting sintered body contains a rare earth aluminate crystal phase and 2.7% by volume or more and 57.0% by volume or less of an aluminum oxide phase. The raw material mixture contains Al at a predetermined ratio to obtain a target composition in which a molar ratio of Al is expressed as a product of a parameter p, being 0.61 or more and 0.90 or less, and a parameter k, the parameter k being more than 5.25 and less than 19. This allows excess Al, exceeding the Al required to form a rare earth aluminate crystal phase having an yttrium aluminum garnet structure, to form oxygen and 2.7% by volume or more and 57.0% by volume or less of an aluminum oxide phase. When the raw material mixture contains Al at a predetermined ratio to obtain a target composition in which, a molar ratio of Al is expressed by the parameter p and the parameter k that is more than 5.25 and less than 19, the Al forms 2.7% by volume or more and 57.0% by volume of an aluminum oxide phase in the sintered body. When the raw material mixture contains Al, Ga, and optionally Sc at predetermined ratios to obtain a target composition in which the total molar ratio of Al, Ga, and optionally contained Sc, which form the yttrium aluminum garnet structure, is more than 5, the sintered body contains an aluminum oxide phase. The content of the aluminum oxide phase in the sintered body may be 2.8% by volume or more, or may be 3.0% by volume or more; and may be 56.0% by volume or less, may be 50% by volume or less, may be 40% by volume or less, may be 30% by volume or less, or may be 25% by volume or less. The sintered body contains 2.7% by volume or more and 57.0% by volume of an aluminum oxide phase, so that, when the sintered body is irradiated with light having, for example, an energy density of 34.0 W/mm$^2$ and a light emission peak wavelength of 450 nm, the irradiated light is scattered by the aluminum oxide phase in the sintered body, which facilitates absorption of the light by the rare earth aluminate crystal phase and thus facilitates conversion of the wavelength. Accordingly, the luminous flux and the light extraction efficiency of the wavelength-converted light can be increased while maintaining the illumination efficiency of the light emitted from the sintered body.

The amount of the aluminum oxide phase in the resulting sintered body can be calculated from the molar ratio of excess Al beyond the molar ratio of Al constituting the yttrium aluminum garnet structure in the molar ratio of Al contained in the raw material mixture. Because the molar ratio of Al is 5 in the composition forming the yttrium aluminum garnet structure, when the total molar ratio of Al, Ga, and optionally contained Sc exceeds 5, the value by which the total molar ratio exceeds 5 is the value of the excess Al, and the excess Al forms an aluminum oxide phase separated from the rare earth aluminate crystal phase. Based on the atomic weight and density of Al, the volume ratio of the aluminum oxide phase formed by the excess Al is calculated from the molar ratio of the excess Al, assuming the total volume of the sintered body is 100% by volume. The total volume of the sintered body can be calculated from the molar ratio of each element of the rare earth element R$^1$, Ce, Al, Ga, and optionally contained Sc in the raw material mixture that are to constitute the sintered body, the atomic weight of each element, and the density of the rare earth aluminate crystal phase and the density of the aluminum oxide phase.

The composition of the sintered body is derived from analytical values of each element of the rare earth element R$^1$, Ce, Al, Ga, and optionally contained Sc, obtained by analysis using, for example, an inductively coupled plasma atomic emission spectrometer (ICP-AES) (for example, Optima 8300, manufactured by PerkinElmer Inc.). Then, the volume ratio of the aluminum oxide phase assuming that the total volume of the sintered body is 100% by volume can also be calculated from the molar ratio of each element constituting the composition, the atomic weight of each element, the density of the rare earth aluminate crystal phase, and the density of the aluminum oxide phase.

The sintered body preferably contains an aluminum oxide phase of, on a surface or a cross section of the sintered body, 2.7 area% or more and 62.0 area% or less relative to 100 area% of the surface or the cross section, and it may be 2.8 area% or more and 61.0 area% or less, may be 2.9 area% or more and 60.0 area% or less, or may be 3.0 area% or more and 60.0 area% or less. When the sintered body contains an aluminum oxide phase, on the surface or the cross section of the sintered body, of 2.7 area% or more and 62.0 area% or less, and when the sintered body is irradiated with light having, for example, an energy density of 34.0 W/mm$^2$ and a light emission peak wavelength of 450 nm, the irradiated light is scattered by the aluminum oxide phase in the sintered body, and the light is easily scattered by the aluminum oxide phase in the sintered body, which facilitates absorption of the light by the rare earth aluminate crystal phase and thus facilitates conversion of the wavelength, so that the luminous flux and the light extraction efficiency of the wavelength-converted light can be increased while maintaining the illumination efficiency of the light emitted from the sintered body.

The rare earth aluminate crystal phase contained in the sintered body contains Ce as an activating element, and the sintered body is irradiated with light to convert the wavelength of the light, thereby obtaining a rare earth aluminate fluorescent material crystal phase that emits light having a light emission peak wavelength in a specific range. When the resulting sintered body is irradiated with light having an energy density of 34.0 W/mm$^2$ and a light emission peak wavelength of 450 nm, the irradiated light is subjected to wavelength-conversion by the rare earth aluminate crystal phase, and the sintered body emits light having a light emission spectrum with a light emission peak wavelength of 500 nm or more and less than 650 nm. The sintered body may be configured, when irradiated with light having an energy density of 34.0 W/mm$^2$ and a light emission peak wavelength of 450 nm, to convert the wavelength of the light and emit light having a light emission peak wavelength of 500 nm or more and 640 nm or less, 510 nm or more and 630 nm or less, or 510 nm or more and 620 nm or less in the light emission spectrum.

The sintered body preferably has a configuration in which, when irradiated with light having an energy density of 34.0 W/mm$^2$ and a light emission peak wavelength of 450 nm, light having chromaticity coordinates of the CIE (Commission Internationale de l'Eclairage) chromaticity diagram with a x value of 0.340 or more and 0.380 or less and a y value of 0.580 or more and 0.610 or less is emitted by the rare earth aluminate crystal phase contained in the sintered body. The raw material mixture contains Ga at a predetermined ratio to obtain a target composition in which a molar ratio of Ga is expressed as a product of a parameter n of 0.10 or more and 0.39 or less and the parameter k. Accordingly, even if lutetium (Lu) is not contained in the obtained composition as the rare earth element $R^1$, the rare earth aluminate crystal phase contained in the sintered body emits light having a color similar to that of the case containing lutetium as the rare earth element $R^1$. Thus, a sintered body containing a rare earth aluminate crystal phase, which emits light having a color similar to that of a rare earth aluminate crystal phase containing lutetium in the composition, can be obtained at low cost without using lutetium. The sintered body may be configured to emit, when irradiated with light having an energy density of 34.0 $W/mm^2$ and a light emission peak wavelength of 450 nm, light having chromaticity coordinates of the CIE chromaticity diagram with a x value of 0.341 or more and 0.368 or less and a y value of 0.591 or more and 0.608 or less by the rare earth aluminate crystal phase contained in the sintered body.

The sintered body has an absolute maximum length of the aluminum oxide phase of 0.01 $\mu$m or more and less than 10.0 $\mu$m and an absolute maximum length of the rare earth aluminate crystal phase of 0.01 $\mu$m or more and less than 10.0 pm, as measured under the measurement condition described above and below, on the surface or the cross section of the sintered body. The absolute maximum length of the aluminum oxide phase on the surface or the cross section of the sintered body may be 0.05 $\mu$m or more and 9.0 $\mu$m or less, may be 0.1 $\mu$m or more and 8.0 $\mu$m or less, may be 0.5 $\mu$m or more and 6.0 $\mu$m or less, or may be 0.5 $\mu$m or more and 5.0 $\mu$m or less. The absolute maximum length of the rare earth aluminate crystal phase on the surface or the cross section of the sintered body may be 0.05 $\mu$m or more and 9.0 $\mu$m or less, may be 0.1 $\mu$m or more and 8.0 $\mu$m or less, may be 0.5 $\mu$m or more and 6.0 $\mu$m or less, or may be 0.5 $\mu$m or more and 5.0 $\mu$m or less. The aluminum oxide phase and the rare earth aluminate crystal phase are uniformly dispersed and mixed. Therefore, when the sintered body is irradiated with light having, for example, an energy density of 34.0 $W/mm^2$ and a light emission peak wavelength of 450 nm, the irradiated light is easily scattered by the aluminum oxide phase in the sintered body, which facilitates absorption of the light by the rare earth aluminate crystal phase and thus facilitates conversion of the wavelength, so that the luminous flux and the light extraction efficiency of the wavelength-converted light can be increased while maintaining the illumination efficiency of the light emitted from the sintered body. It is preferred that there are no crystal agglomerates of agglomerated rare earth aluminate crystal phase on the surface or the cross section of the sintered body, and that the rare earth aluminate crystal phase and the aluminum oxide phase are uniformly dispersed and mixed.

Measurement Condition

The absolute maximum length is measured as a distance between two most distant points of the contour of an aluminum oxide phase or a rare earth aluminate crystal phase included in a measurement range on the surface or the cross section of the sintered body.

More specifically, in an SEM micrograph obtained by photographing the surface or the cross section of the sintered body using a scanning electron microscope (SEM), the region having an area of 3,024 $\mu m^2$ is defined as a measurement range, and the absolute maximum length may be measured as a distance between two most distant points of the contour of an aluminum oxide phase or a rare earth aluminate crystal phase included in the measurement range.

In the sintered body, an arithmetic average value of the absolute maximum length (hereinafter, also referred to as "average absolute maximum length") of the rare earth aluminate crystal phase included in the measurement range having an area of 3,024 $\mu m^2$ is preferably 1.0 $\mu$m or more and 4.0 $\mu$m or less, and it may be 1.1 $\mu$m or more and 3.7 $\mu$m or less, or may be 1.2 $\mu$m or more and 3.5 $\mu$m or less. With the average absolute maximum length of the rare earth aluminate crystal phase contained in the sintered body being 1.0 $\mu$m or more and 4.0 $\mu$m or less, when the sintered body is irradiated with light having, for example, an energy density of 34.0 $W/mm^2$ and a light emission peak wavelength of 450 nm, the irradiated light is scattered by the aluminum oxide phase in the sintered body, which facilitates absorption of the light by the rare earth aluminate crystal phase and thus facilitates conversion of the wavelength, so that the luminous flux and the light extraction efficiency of the wavelength-converted light can be increased while maintaining the illumination efficiency of the light emitted from the sintered body.

In the sintered body, a maximum value of the absolute maximum length of the rare earth aluminate crystal phase included in the measurement range having an area of 3,024 $\mu m^2$ is preferably 1.5 $\mu$m or more and 7.5 $\mu$m or less, and it may be 1.7 $\mu$m or more and 7.2 $\mu$m or less, or may be 2.0 $\mu$m or more and 7.0 $\mu$m or less. With the maximum value of the absolute maximum length of the rare earth aluminate crystal phase contained in the sintered body being 1.5 $\mu$m or more and 7.5 $\mu$m or less, when the sintered body is irradiated with light having, for example, an energy density of 34.0 $W/mm^2$ and a light emission peak wavelength of 450 nm, the light is easily absorbed by the rare earth aluminate crystal phase, which facilitates conversion of the wavelength, so that the luminous flux and the light extraction efficiency of the wavelength-converted light can be increased while maintaining the illumination efficiency of the light emitted from the sintered body.

In the sintered body preferably, a minimum value of the absolute maximum length of the rare earth aluminate crystal phase included in the measurement range having an area of 3,024 $\mu$m$^2$ is preferably 0.1 $\mu$m or more and 2.0 $\mu$m or less, and it may be 0.2 $\mu$m or more and 1.7 $\mu$m or less, or may be 0.5 $\mu$m or more and 1.5 $\mu$m or less. With the minimum value of the absolute maximum length of the rare earth aluminate crystal phase contained in the sintered body being 0.1 $\mu$m or more and 2.0 $\mu$m or less, when the sintered body is irradiated with light having, for example, an energy density of 34.0 W/mm$^2$ and a light emission peak wavelength of 450 nm, the light is easily absorbed by the rare earth aluminate crystal phase, which facilitates conversion of the wavelength, so that the luminous flux and the light extraction efficiency of the wavelength-converted light can be increased while maintaining the illumination efficiency of the light emitted from the sintered body.

In the sintered body, a standard deviation of the average absolute maximum length of the rare earth aluminate crystal phase included in the measurement range having an area of 3,024 $\mu$m$^2$ is preferably 0.10 $\mu$m or more and 0.90 $\mu$m or less, and it may be 0.12 $\mu$m or more and 0.87 $\mu$m or less, or may be 0.15 $\mu$m or more and 0.85 $\mu$m or less. With the standard deviation of the average absolute maximum length of the rare earth aluminate crystal phase contained in the sintered body being 0.10 $\mu$m or more and 0.90 $\mu$m or less, the variation of the average absolute maximum length is small, and when the sintered body is irradiated with light having, for example, an energy density of 34.0 W/mm$^2$ and a light emission peak wavelength of 450 nm, the light is easily absorbed by the rare earth aluminate crystal phase, which facilitates conversion of the wavelength, so that the luminous flux and the light extraction efficiency of the wavelength-converted light can be increased while maintaining the illumination efficiency of the light emitted from the sintered body.

In the sintered body, an arithmetic average value of the absolute maximum length (hereinafter, also referred to as "average absolute maximum length") of the aluminum oxide phase included in the measurement range having an area of 3,024 $\mu$m$^2$ is preferably 0.1 $\mu$m or more and 2.5 $\mu$m or less, and it may be 0.2 $\mu$m or more and 2.3 $\mu$m or less, or may be 0.5 $\mu$m or more and 2.0 $\mu$m or less. With the average absolute maximum length of the aluminum oxide phase contained in the sintered body being 0.1 $\mu$m or more and 2.5 $\mu$m or less, when the sintered body is irradiated with light having, for example, an energy density of 34.0 W/mm$^2$ and a light emission peak wavelength of 450 nm, the light is easily scattered by the aluminum oxide phase in the sintered body, which facilitates absorption of the light by the rare earth aluminate crystal phase and thus facilitates conversion of the wavelength, so that the luminous flux and the light extraction efficiency of the wavelength-converted light can be increased while maintaining the illumination efficiency of the light emitted from the sintered body.

In the sintered body, a maximum value of the absolute maximum length of the aluminum oxide phase included in the measurement range having an area of 3,024 $\mu$m$^2$ is preferably 1.0 $\mu$m or more and 4.0 $\mu$m or less, and it may be 1.2 $\mu$m or more and 3.8 $\mu$m or less, or may be 1.5 $\mu$m or more and 3.5 $\mu$m or less. With the maximum value of the absolute maximum length of the aluminum oxide phase contained in the sintered body being 1.0 $\mu$m or more and 4.0 $\mu$m or less, when the sintered body is irradiated with light having, for example, an energy density of 34.0 W/mm$^2$ and a light emission peak wavelength of 450 nm, the light is easily scattered by the aluminum oxide phase, which facilitates absorption of the light by the rare earth aluminate crystal phase and thus facilitates conversion of the wavelength, so that the luminous flux and the light extraction efficiency of the wavelength-converted light can be increased while maintaining the illumination efficiency of the light emitted from the sintered body.

In the sintered body, a minimum value of the absolute maximum length of the aluminum oxide phase included in the measurement range having an area of 3,024 $\mu$m$^2$ is preferably 0.1 $\mu$m or more and 1.5 $\mu$m or less, and it may be 0.1 $\mu$m or more and 1.3 $\mu$m or less, or may be 0.1 $\mu$m or more and 1.0 $\mu$m or less. With the minimum value of the absolute maximum length of the aluminum oxide phase contained in the sintered body being 0.1 $\mu$m or more and 1.5 $\mu$m or less, when the sintered body is irradiated with light having, for example, an energy density of 34.0 W/mm$^2$ and a light emission peak wavelength of 450 nm, the light is easily scattered by the aluminum oxide phase, which facilitates absorption of the light by the rare earth aluminate crystal phase and thus facilitates conversion of the wavelength, so that the luminous flux and the light extraction efficiency of the wavelength-converted light can be increased while maintaining the illumination efficiency of the light emitted from the sintered body.

In the sintered body, a standard deviation of the average absolute maximum length of the aluminum oxide phase included in the measurement range having an area of 3,024 $\mu$m$^2$ is preferably 0.10 $\mu$m or more and 0.90 $\mu$m or less, and it may be 0.12 $\mu$m or more and 0.85 $\mu$m or less, or may be 0.15 $\mu$m or more and 0.80 $\mu$m or less. With the standard deviation of the average absolute maximum length of the aluminum oxide phase contained in the sintered body being 0.10 $\mu$m or more and 0.90 $\mu$m or less, the variation of the average absolute maximum length is small, and when the sintered body is irradiated with light having, for example, an energy density of 34.0 W/mm$^2$ and a light emission peak wavelength of 450 nm, the light is easily scattered by the aluminum oxide phase, which facilitates absorption of the light by the rare earth aluminate crystal phase and thus facilitates conversion of the wavelength, so that the luminous flux and the light extraction efficiency of the wavelength-converted light can be increased while maintaining the illumination efficiency of the light emitted from the sintered body.

The sintered body is a sintered body containing a rare earth aluminate crystal phase and an aluminum oxide phase, and contains: a rare earth element $R^1$ being at least one selected from the group consisting of Y, La, Gd, and Tb; Ce: Al; and Ga; and optionally Sc, wherein the sintered body contains 13% by mass or more and 23% by mass or less of the Ga relative to a total amount of the sintered body, and the sintered body contains 2.7% by volume or more and 57.0% by volume or less of the aluminum oxide phase relative to the total volume of the sintered body. The sintered body is preferably a sintered body produced by the aforementioned production method. When the sintered body contains a rare earth aluminate crystal phase and an aluminum oxide phase, and the amount of the aluminum oxide phase is 2.7% by volume or more and 57.0% by volume or less relative to the total volume of the sintered body, the light irradiated on the sintered body is scattered by the aluminum oxide phase, which facilitates absorption of the light by the rare earth aluminate crystal phase and thus facilitates conversion of the wavelength. When the sintered body contains Ga in the range of 13% by mass or more and 23% by mass or less relative to the total amount of the sintered body, even if lutetium (Lu) is not contained, the sintered body can emit light having a color similar to that of the case containing lutetium. In consideration of the color of light emitted from the sintered body when the sintered body is irradiated with light, the amount of Ga contained in the sintered body is preferably in a range of 13% by mass or more and 23% by mass or less, more preferably in a range of 14% by mass or more and 22% by mass or less, even more preferably in a range of 15% by mass or more and 21% by mass or less, and may be in a range of 17% by mass or more and 21% by mass or less, relative to the total amount of the sintered body.

The amount of Al contained in the sintered body may be an amount that allows the sintered body to contain a rare earth aluminate crystal phase, which has an yttrium aluminum garnet crystal structure, and 2.7% by volume or more and 57.0% by volume or less of an aluminum oxide phase, The amount of Al contained in the sintered body may be 11% by mass or more and 50% by mass or less, may be 12% by mass or more and 48% by mass or less, or may be 12% by mass or more and 45% by mass or less, relative to the total amount of the sintered body.

If the molar ratio of Ga in the raw material mixture constituting the sintered body and the molar ratio of each element constituting the sintered body is determinable, the amount of Ga contained in the sintered body can be calculated from the atomic weight and the molar ratio of each element constituting the sintered body and the atomic weight and the molar ratio of Ga contained in the raw material mixture.

If the molar ratio of each element of the rare earth element R[1], Ce, Al, Ga, and optionally contained Sc contained in the sintered body is determinable from the elemental analysis value obtained by analysis using, for example, an inductively coupled plasma atomic emission spectrometer (ICP-AES) (for example, Optima 8300, manufactured by PerkinElmer Inc.), the amount of Ga contained in the sintered body can be calculated from the analysis value of the molar ratio of each element and the atomic weight of each element.

The sintered body contains 2.7% by volume or more and 57.0% by volume or less of an aluminum oxide phase, relative to the total volume of the sintered body. When the sintered body contains a rare earth aluminate crystal phase and 2.7% by volume or more and 57.0% by volume or less of an aluminum oxide phase relative to the total volume of the sintered body, the light irradiated on the sintered body is scattered by the aluminum oxide phase, which facilitates absorption of light by the rare earth aluminate crystal phase and thus facilitates conversion of the wavelength. The amount of the aluminum oxide phase contained in the sintered body may be 2.8% by volume or more and 56.0% by volume or less relative to the total a volume mount of the sintered body. The amount of the aluminum oxide phase contained in the sintered body may be less than 30% by volume, may be 2.9% by volume or more and less than 30% by volume, or may be 3.0% by volume or more and 29.0% by volume or less, relative to the total volume of the sintered body.

The sintered body preferably has a composition in which the total molar ratio of a rare earth element R[1] being at least one selected from the group consisting of Y, La, Gd, and Tb and Ce is 3, the molar ratio of Ce is a product of 3 and a parameter m, the parameter m being 0.001 or more and 0.017 or less, the total molar ratio of Al, Ga, and optionally contained Sc is a parameter k being more than 5.25 and less than 19, the molar ratio of Al is a product of a parameter p, being 0.61 or more and 0.90 or less, and the parameter k, and the molar ratio of Ga is a product of a parameter n, being 0.10 or more and 0.39 or less, and the parameter k. The sintered body is preferably a sintered body obtained by the aforementioned production method.

The sintered body contains Al at a molar ratio expressed as the product of the parameter p, being 0.61 or more and 0.90 or less, and the parameter k, the parameter k being more than 5.25 and less than 19, so that the sintered body contains a rare earth aluminate crystal phase having an yttrium aluminum garnet structure and an aluminum oxide phase formed by excess Al beyond the Al required to form the rare earth aluminate crystal phase having an yttrium aluminum garnet structure, and oxygen.

In addition, the sintered body contains Ga at a molar ratio expressed as the product of the parameter n, being 0.10 or more and 0.39 or less, and the parameter k. This allows for obtaining, even if lutetium (Lu) is not contained, a rare earth aluminate crystal phase that emits light having a light emission peak wavelength similar to that of the case containing lutetium can be obtained.

The composition of each element constituting the sintered body can be determined as follows: the sintered body is melted in an alkaline solution and then heated and dissolved in a hydrochloric acid solution; and the sintered body dissolved in the hydrochloric acid solution is subjected to compositional analysis to measure the amount of each element using an inductively coupled plasma atomic emission spectrometer (ICP-AES) (for example, Optima 8300, manufactured by PerkinElmer Inc.).

It is preferred that the sintered body is configured to, by irradiation with light having an energy density of 34.0 $W/mm^2$ and a light emission peak wavelength of 450 nm, convert the wavelength of the irradiated light, and then to emit light having a light emission spectrum with a light emission peak wavelength of 500 nm or more and less than 650 nm.

The sintered body contains Ga, which allows for obtaining, even if the sintered body does not contain lutetium (Lu) as the rare earth element $R^1$, a rare earth aluminate crystal phase that emits light having a light emission peak wavelength similar to that of the case containing lutetium as the rare earth element $R^1$. With Ga contained in the sintered body, the sintered body have a distorted crystal structure compared to the case where Ga is not contained in the sintered body, and even if the sintered body does not contain lutetium (Lu) as the rare earth element $R^1$, the sintered body contains a rare earth aluminate crystal phase that emits light having a light emission peak wavelength shifted to the short wavelength side by irradiation with excitation light. The sintered body is preferably a sintered body obtained by the aforementioned production method.

The rare earth aluminate crystal phase may have a composition represented by the following formula (II):

$$(R^1_{1-m1}Ce_{m1})_3(Al_{p1}Ga_{n1}Sc_{q1})_{k1}O_{4.5+1.5k1} \quad (II),$$

wherein $R^1$ represents at least one selected from Y, La, Gd, and Tb; and k1, m1, n1, p1, and q1 satisfy $4.75 \leq k1 \leq 5.5$, $0.001 \leq m1 \leq 0.017$, $0.25 \leq n1 \leq 0.55$, $0.45 \leq p1 \leq 0.75$, $0 \leq q1 \leq 0.02$, and p1+n1+q1=1.

The rare earth aluminate crystal phase may have a composition represented by the following formula (III):

$$(R^1_{1-m1-r}Lu_rCe_{m1})_3(Al_{p1}Ga_{n1}Sc_{q1})_{k1}O_{4.5+1.5k1} \quad (III),$$

wherein $R^1$ represents at least one selected from Y, La, Gd, and Tb; r, k1, m1, n1, p1, and q1 satisfy $0 \leq r \leq 0.1$, $4.75 \leq k1 \leq 5.5$, $0.001 \leq m1 \leq 0.017$, $0.25 \leq n1 \leq 0.55$, $0.45 \leq p1 \leq 0.75$, $0 \leq q1 \leq 0.02$, and p1+n1+q1=1; and r may satisfy $0.001 \leq r \leq 0.1$, $0.002 \leq r \leq 0.08$, or $0.003 \leq r \leq 0.05$.

The sintered body preferably has a relative density of 90% or more. The relative density thereof is more preferably 95% or more, even more preferably 97% or more, and still more preferably 98% or more; and may be 100%, or may be 99% or less. When the relative density of the sintered body is 90% or more and 100% or less, the irradiated light is easily scattered by the aluminum oxide phase in the sintered body, which facilitates absorption of the light by the rare earth aluminate crystal phase and thus facilitates conversion of the wavelength, so that the luminous flux and the light extraction efficiency of the wavelength-converted light can be increased while maintaining the illumination efficiency of the light emitted from the sintered body.

The relative density of the sintered body can be calculated from an apparent density of the sintered body and a true density of the sintered body according to the following formula (1).

$$\begin{aligned} &Relative\ density\ (\%)\ of\ sintered\ body \\ &= (Apparent\ density\ of\ sintered\ body \div True\ density\ of\ sintered\ body) \times 100 \quad (1) \end{aligned}$$

The apparent density of the sintered body is a value obtained by dividing the mass of the sintered body by the volume of the sintered body, and can be calculated according to the following formula (2). The true density of the sintered body can be calculated according to the following formula (3) by using a true density of the rare earth aluminate crystal phase and a true density of the aluminum oxide phase. The void ratio of the sintered body is obtained by subtracting the relative density of the sintered body from 100%, and can be calculated according to the following formula (4).

$$\begin{aligned} &Apparent\ density\ of\ sintered\ body \\ &= Mass\ (g)\ of\ sintered\ body \div Volume\ (cm^3)\ of\ sintered\ body \\ &\qquad\qquad (Archimedes'\ method) \quad (2) \end{aligned}$$

$$True\ density\ of\ sintered\ body = \frac{P1_d \times P2_d \times (P1_m + P2_m)}{(P2_d \times P1_m) + (P1_d \times P2_m)} \quad (3)$$

Mass ratio (% by mass) of rare earth aluminate crystal phase: $P1_m$
True density ($g/cm^3$) of rare earth aluminate crystal phase: $P1_d$
Mass ratio (% by mass) of aluminum oxide phase: $P2_m$
True density ($g/cm^3$) of aluminum oxide phase: $P2_d$
$P1_m + P2_m$ = 100% by mass

$$Void\ ratio\ (\%)\ of\ sintered\ body$$
$$= 100\ (\%) - Relative\ density\ (\%)\ of\ sintered\ body \qquad (4)$$

The sintered body can be used as a reflection-type wavelength conversion member in which the incident surface (first main surface) on which the excitation light is incident and the emitting surface (first main surface) from which the wavelength-converted light is emitted are the same. When the sintered body is used as a reflection-type wavelength conversion member, the sintered body may have any appropriate thickness, and when the sintered body is a plate-shaped body, the plate thickness is preferably 90 μm or more and 250 μm or less, and more preferably 100 μm or more and 240 μm or less, so as to improve the light extraction efficiency.

When the sintered body has a plate shape and the incident surface on which the excitation light is incident and the emitting surface from which the wavelength-converted light is emitted are the same, the light diameter of the emitting light is preferably 140% or less, and more preferably 135% or less, assuming the light diameter of the incident light is 100%. When the light diameter of the light emitted from the same surface as the incident surface is 140% or less relative to the light diameter of the incident light being 100%, divergence of the emitting light can be decreased while maintaining the illumination efficiency described below, so that the light emitted from the sintered body can be converged to a desired position. The light diameter of the incident light that is incident on one surface of the sintered body is a light diameter of light emitted from a light source. The light diameter of the incident light can be measured using, for example, a color luminance meter. The light dimeter of the incident light is preferably 0.1 mm or more and 5 mm or less, and more preferably 0.5 mm or more and 4 mm or less. When light is emitted from a surface on which the light has been incident, the light diameter of the emitted light can be determined as follows: the luminance of the light emitted from the sintered body is measured using a color luminance meter; a position at which the maximum luminance is exhibited in the obtained light emission spectrum is defined as a center (measuring center); the distances (mm) of two positions in the light emission spectrum where the luminance is 30/100 of the maximum luminance (hereinafter, may be referred to as "30/100 luminance") from the measuring center are measured in terms of absolute values; and the sum of the absolute values of the distances (mm) of the two positions in the light emission spectrum where the luminance is 30/100 of the maximum luminance from the measuring center is determined as the light diameter of the emitting light.

The resulting sintered body can be used as a wavelength conversion member by being combined with a light source, in light emitting devices such as light sources for projectors.

A light emitting device using the aforementioned sintered body as a wavelength conversion member is described below. The light emitting device includes the sintered body and an excitation light source.

The excitation light source is preferably a semiconductor light emitting element composed of an LED chip or an LD chip. The semiconductor light emitting element can use a nitride-based semiconductor. By using a semiconductor light emitting element as the excitation light source, a stable light emitting device having high efficiency, high output linearity with respect to the input, and high resistance to mechanical shock can be obtained. The sintered body converts the wavelength of light emitted from the semiconductor light emitting element, which allows for obtaining a light emitting device configured to emit mixed color light containing wavelength-converted light. The semiconductor light emitting element is preferably configured to emit light having an energy density of 34.0 W/mm$^2$. The semiconductor light emitting element preferably emits light having a light emission peak wavelength of, for example, 350 nm or more and 500 nm or less. The sintered body is preferably configured to convert the wavelength of excitation light emitted from the semiconductor light emitting element to emit light having a light emission peak wavelength of 500 nm or more and less than 650 nm.

The light emitting element is more preferably a laser diode. Excitation light emitted from a laser diode serving as the excitation light source is incident on the wavelength conversion member; light having a wavelength converted by the fluorescent material contained in the ceramic composite of the wavelength conversion member is converged and separated into red light, green light, and blue light by plural optical systems such as a lens array, a deflection conversion element, and a color separation optical system; and the lights may be modulated according to image information to form color image lights. Excitation light emitted from a laser diode serving as the excitation light source may also be incident on the wavelength conversion member through an optical system such as a dichroic mirror or a collimating optical system.

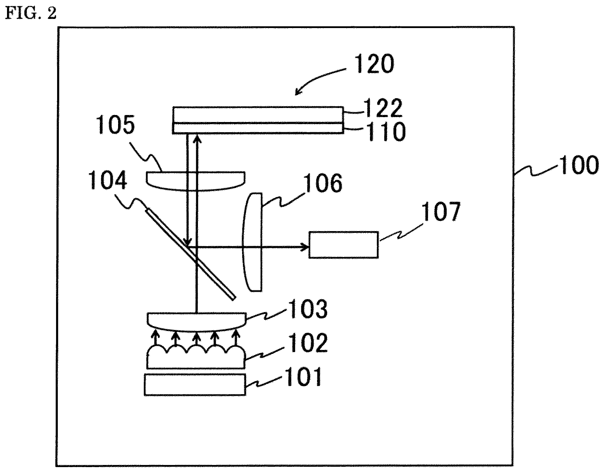

FIG. 2 shows a schematic diagram illustrating a configuration of an exemplary light emitting device 100. Arrows in FIG. 2 schematically represent optical paths of light. The light emitting device 100 preferably includes an excitation light source 101 serving as a light emitting element, a collimating lens 102, three condenser lenses 103, 105, and 106, a dichroic mirror 104, a rod integrator 107, and a wavelength conversion device 120 including a wavelength conversion member. The excitation light source 101 preferably uses a laser diode. As the excitation light source 101, a plurality of laser diodes may be used, or a plurality of laser diodes that are disposed in an array or matrix may be used. The collimating lens 102 may be a collimating lens array in which a plurality of collimating lenses are disposed in an array. Laser light emitted from the excitation light source 101 is converted into substantially parallel light by the collimating lens 102, converged by the condenser lens 103, passed through the dichroic mirror 104, and further converged by the condenser lens 105. The laser light converged by the condenser lens 105 is wavelength-converted by the wavelength conversion device 120 including a wavelength conversion member 110 and preferably a light reflection plate 122, and light having a light emission peak wavelength in a desired wavelength range is emitted from the wavelength conversion member 110 side of the wavelength conversion device 120. The wavelength-converted light emitted from the wavelength conversion device 120 is converged by the condenser lens 106, and is incident on the rod integrator 107, so that light having an illuminance distribution with improved uniformity in a region to be illuminated is emitted from the light emitting device 100.

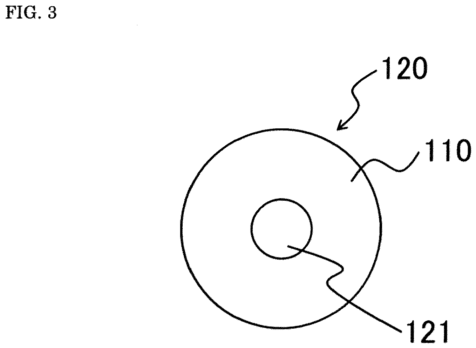

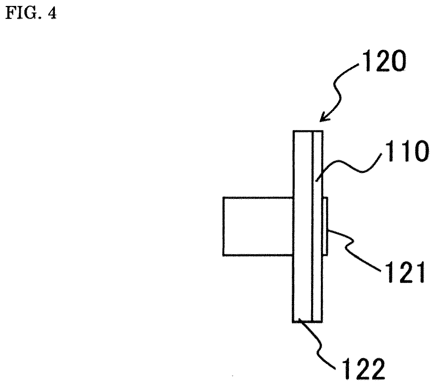

FIG. 3 shows a schematic diagram illustrating a planar configuration of an exemplary wavelength conversion device 120. FIG. 4 shows a side view of the wavelength conversion device 120 as one of the members constituting a light emitting device 100. The wavelength conversion device 120 includes at least a wavelength conversion member 110. The wavelength conversion device 120 includes a disk-shaped wavelength conversion member 110, and may include a rotation mechanism 121 for rotating the wavelength conversion member 110. The rotation mechanism 121 is connected to a drive mechanism such as a motor, which allows for dissipating heat by rotating the wavelength conversion member 110.

FIG. 4 shows a schematic diagram showing a side view configuration of an exemplary wavelength conversion device 120, which illustrates the details of the wavelength conversion device 120 shown in side view as one of the members constituting a light emitting device 100 in FIG. 2. The wavelength conversion device 120 may include a wavelength conversion member 110 and a light reflection plate 122 on a side of the wavelength conversion member 110 opposite to the side of the light incident surface of the wavelength conversion member 110. If the wavelength conversion member 110 alone is sufficient to emit a desired light, the light reflection plate 122 can be omitted. The light reflection plate 122 may be used not only as a member for reflecting the light, but also as a heat dissipation member for transmitting and dissipating the heat generated in the wavelength conversion member 110 to the outside.

Embodiments according to the present disclosure include the following method for producing a sintered body and the sintered body.

*Add later*

EXAMPLES

The present disclosure is hereunder specifically described with reference to the following Examples. The present disclosure is not limited to the following Examples.

Yttrium oxide particles having an yttrium oxide purity of 98% by mass and a specific surface area of 20 $m^2/g$ were used.

Cerium oxide particles having a cerium oxide purity of 92% by mass and a specific surface area of 125 $m^2/g$ were used.

Aluminum oxide particles having an aluminum oxide purity of 99% by mass and a specific surface area of 6 $m^2/g$ were used.

Gallium oxide particles having a gallium oxide purity of 99% by mass and a specific surface area of 2 $m^2/g$ were used.

Lutetium oxide particles having a lutetium oxide purity of 99% by mass and a specific surface area of 12 $m^2/g$ were used.

Specific Surface Area

For the yttrium oxide particles, the cerium oxide particles, the aluminum oxide particles, the gallium oxide particles, and the lutetium oxide particles, the specific surface area was measured by the BET method using a specific surface area measuring apparatus (manufactured by Mountech Co., Ltd.).

Example 1

Providing Raw Material Mixture

The yttrium oxide particles, the cerium oxide particles, the aluminum oxide particles, and the gallium oxide particles were used and weighed at a predetermined ratio to obtain a target composition in which represented by the formula (I) of $(R^1{}_{1-m}Ce_m)_3(Al_pGa_nSc_q)_kO_{4.5+1.5k}$, the molar ratios of the elements Y, Ce, Al, and Ga, each contained in a respective one of these oxide particles, were the values shown in Table 1 as the values expressed by the parameters m, p, n, and k. In the formula (I), the rare earth element $R^1$ was yttrium (Y). In the formula (I), the parameter q was zero (0). A dispersant (ESLEAM-2093I, manufactured by NOF Corp.) in an amount of 3 parts by mass was added to 100 parts by mass of the total amount of the yttrium oxide particles, the cerium oxide particles, the aluminum oxide particles, and the gallium oxide particles, and 50 parts by mass of ethanol was further added thereto to provide a raw material mixture.

The raw material mixture was stirred using a wet ball mill for 15 hours to provide a raw material mixture in a form of a slurry in which the yttrium oxide particles, the cerium oxide particles, the aluminum oxide particles, and the gallium oxide particles were uniformly mixed.

The resulting raw material mixture in a form of a slurry was dried at 130°C for 10 hours in an air atmosphere to obtain a powdered raw material mixture.

Molding Raw Material Mixture

The resulting powdered raw material mixture was filled in a die, and a cylindrical molded body having a diameter of 26 mm and a thickness of 10 mm was formed under a pressure of 5 MPa (51 kgf/cm$^2$). The resulting cylindrical molded body was placed in a package container and vacuum-packed, and then subjected to cold isostatic pressing (CIP) at 176 MPa using a CIP apparatus (manufactured by Kobe Steel, Ltd. (KOBELCO)) to obtain a molded body.

The resulting molded body was thermal-degreased at 700°C in an air atmosphere.

Calcining Molded Body

The resulting molded body was calcined using a calcining furnace (manufactured by Marusho Denki Co., Ltd.) to obtain a sintered body. The calcination was performed under the conditions of an air atmosphere (101.325 kPa, oxygen concentration of approximately 20% by volume), a temperature of 1,560°C, and a calcination time of 6 hours.

The resulting sintered body was cut into an appropriate shape and size using a wire saw, and the surface of the cut product was polished using a surface grinder. Thus, a sintered body according to Example 1 having a plate thickness of 200 μm was obtained.

Example 2

A sintered body according to Example 2 was obtained in the same or similar manner as in Example 1, except that The yttrium oxide particles, the cerium oxide particles, the aluminum oxide particles, and the gallium oxide particles were used and weighed at a predetermined ratio to obtain a target composition in which represented by the formula (I) of $(R^1_{1-m}Ce_m)_3(Al_pGa_nSc_q)_kO_{4.5+1.5k}$, the molar ratios of the elements Y, Ce, Al, and Ga, each contained in a respective one of these oxide particles, were the values of Example 2 in Table 1 as the parameters m, p, n, and k.

Examples 3, 4, and 8

Sintered bodies according to Examples 3, 4, and 8 were obtained in the same or similar manner as in Example 1, except that: the yttrium oxide particles, the cerium oxide particles, the aluminum oxide particles, and the gallium oxide particles were used and weighed at a predetermined ratio to obtain a target composition in which represented by the formula (I) of $(R^1_{1-m}Ce_m)_3(Al_pGa_nSc_q)_kO_{4.5+1.5k}$, the molar ratios of the elements Y, Ce, Al, and Ga, each contained in a respective one of these oxide particles, were the values of Examples 3, 4, and 8 in Table 1 as the values expressed by the parameters m, p, n, and k; and the calcining temperature of the molded body was 1,570°C.

Examples 5 to 7, 9, and 10

Sintered bodies according to Examples 5 to 7, 9, and 10 were obtained in the same or similar manner as in Example 1, except that: the yttrium oxide particles, the cerium oxide particles, the aluminum oxide particles, and the gallium oxide particles were used and weighed at a predetermined ratio to obtain a target composition in which represented by the formula (I) of $(R^1_{1-m}Ce_m)_3(Al_pGa_nSc_q)_kO_{4.5+1.5k}$, the molar ratios of the elements Y, Ce, Al, and Ga, each contained in respective ones of these oxide particles, were the values of Examples 5 to 7, 9, and 10 in Table 1 as the values expressed by the parameters m, p, n, and k; and the calcining temperature of the molded body was 1,600°C.

Comparative Example 1

A sintered body according to Comparative Example 1 was obtained in the same or similar manner as in Example 1, except that: the lutetium oxide particles, the cerium oxide particles, and the aluminum oxide particles were used and weighed at a predetermined ratio to obtain a target composition in which the molar ratios of the elements Lu, Ce, and Al, each contained in a respective one of these oxide particles, is represented as $Lu_{2.987}Ce_{0.013}Al_5O_{12}$; and the molded body was heated and degreased in a nitrogen atmosphere.

Comparative Examples 2 and 3

Sintered bodies according to Comparative Examples 2 and 3 were obtained in the same or similar manner as in Example 1, except that the yttrium oxide particles, the cerium oxide particles, the aluminum oxide particles, and the gallium oxide particles were used and weighed at a predetermined ratio to obtain a target composition in which represented by the formula (I) of $(R^1_{1-m}Ce_m)_3(Al_pGa_nSc_q)_kO_{4.5+1.5k}$, the molar ratios of the elements Y, Ce, Al, and Ga, each contained in a respective one of these oxide particles, were the values of Comparative Examples 2 and 3 in Table 1, in which the parameter p is 0.61 or less and the parameter n is 0.39 or more.

The sintered bodies were evaluated as follows. The results are shown in Tables 2 and 3. In Tables 2 and 3, the symbol "-" indicates that there is no corresponding item or numerical value.

Relative Density

The relative density of the sintered body according to each of Examples and Comparative Examples was measured. The relative density of each sintered body was calculated by the above formula (1). The apparent density of each sintered body was calculated by the above formula (2). The true density of each sintered body was calculated by the above formula (3). Because the true density of the rare earth aluminate crystal phase varies depending on the composition of the rare earth aluminate crystal phase, the numerical value of the true density determined from the compositional formula of the target rare earth aluminate crystal phase was used in each of the cases where the target molar ratio of Ga was 1.5 mol, 2.0 mol, and 2.5 mol relative to 1 mol of the rare earth aluminate crystal phase composition in the target composition. For the sintered body according to Example 8 in which the target molar ratio of Ga was 1.5 mol relative to 1 mol of the rare earth aluminate crystal phase composition in the target composition of the rare earth aluminate crystal phase, the true density of the rare earth aluminate crystal phase represented by the compositional formula of $Y_3(Al_{3.5}Ga_{1.5})O_{12}$ was 4.83 g/cm$^3$. For the sintered bodies according to Examples 1 to 7 and Comparative Examples 2 to 3 in which the target molar ratio of Ga was 2.0 mol relative to 1 mol of the rare earth aluminate crystal phase composition in the target composition of the rare earth aluminate crystal phase, the true density of the rare earth aluminate crystal phase represented by the compositional formula of $Y_3(Al_{3.0}Ga_{2.0})O_{12}$ was 4.93 g/cm$^3$. For the sintered bodies according to Examples 9 to 10 in which the target molar ratio of Ga was 2.5 mol relative to 1 mol of the rare earth aluminate crystal phase composition in the target composition of the rare earth aluminate crystal phase, the true density of the rare earth aluminate crystal phase represented by the compositional formula of $Y_3(Al_{2.5}Ga_{2.5})O_{12}$ was 5.02 g/cm$^3$. The true density of the aluminum oxide phase was 3.98 g/cm$^3$. For the sintered body according to Comparative Example 1, the true density of the rare earth aluminate crystal phase represented by the compositional formula of $Lu_3Al_5O_{12}$ was 6.69 g/cm$^3$.

Light Emission Spectrum (Spectral Distribution) and Light Emission Peak Wavelength

The sintered body according to each of Examples and Comparative Examples was irradiated with a laser light having an energy density of 34.0 W/mm$^2$ and a light emission peak wavelength of 450 nm emitted from a laser diode, and the light emission spectrum (spectral distribution) of the light emitted from each sintered body was measured using a spectrophotometer. The light emission peak wavelength of the light emitted from each sintered body was determined from the obtained light emission spectrum.

Chromaticity Coordinates (x and y Values)

The sintered body according to each of Examples and Comparative Examples was irradiated with a laser light having an energy density of 34.0 W/mm$^2$ and a light emission peak wavelength of 450 nm emitted from a laser diode; the light emission spectrum of the light emitted from each sintered body was measured using a spectrophotometer; and the chromaticity coordinates (x and y values) of the light emission color were determined from the obtained light emission spectrum.

Relative Luminous Flux (%)

The sintered body according to each of Examples and Comparative Examples was irradiated with a laser light having an energy density of 34.0 W/mm$^2$ (light emission peak wavelength of 450 nm) emitted from a laser diode such that the light diameter of the incident light was 1.0 mm, and the radiant flux of the light emitted from the same surface as that on which the laser light was incident was measured using an integral sphere. The radiant flux of the sintered body according to Comparative Example 1 was defined as 100%, and the ratio of the radiant flux of the sintered body according to each of Examples and Comparative Examples to the radiant flux of the sintered body according to Comparative Example 1 was expressed as a relative luminous flux (%).

Relative Light Diameter Ratio (%)

Each sintered body was irradiated with a laser light having a light emission peak wavelength of 450 nm emitted from a laser diode such that the light diameter of the incident light was 0.6 mm on the first main surface on which the laser light was incident, and the light diameter of the laser light was defined as the light diameter of the light incident on the first main surface of the sintered body. The light diameter of the light emitted from the same surface as the first main surface on which the laser light was incident was determined as follows: light emission luminance of the light emitted from each sintered body was measured using a color luminance meter; a position exhibiting the maximum luminance in the obtained light emission spectrum was defined as a center (measuring center); distances (mm) of two positions in the light emission spectrum where the luminance was 30/100 of the maximum luminance (30/100 luminance) from the measuring center were measured in terms of absolute values; and the sum of the absolute values of the distances (mm) of the two positions in the light emission spectrum where the luminance was 30/100 of the maximum luminance from the measuring center was determined as the light diameter of the light emitted from the first main surface. The light diameter ratio (light diameter of the emitting light / light diameter of the incident light) of the light diameter of the light emitted from the first main surface to 100% of the light diameter of the light incident on the same surface as the first main surface was determined for each sintered body. The light diameter ratio of the sintered body according to Comparative Example 1 was defined as 100%, and the ratio of the light diameter ratio of the sintered body according to each of Examples and Comparative Examples to the light diameter ratio of the sintered body according to Comparative Example 1 was expressed as a relative light diameter ratio (%).

Illumination Efficiency (%)

The smaller the light diameter ratio, the narrower the area in which the light is emitted (point light source). When an optical system using each sintered body as a wavelength conversion member is a primary optical system and another secondary optical system is present, the light emitted from the primary optical system easily enters the secondary optical system, which allows for increasing the illumination efficiency. The illumination efficiency (illumination efficiency = illumination output $\times$ 100 / fluorescence output) that can be measured using a typical actual secondary optical system (such as a rod integrator) can be approximated by the following formula (5) using the relative light diameter ratio value described above.

$$Illumination\ efficiency\ (\%) = -0.001633x^2 + 0.145x + 58.783$$
$$(x\ represents\ the\ relative\ light\ diameter\ ratio) \quad (5)$$

Relative Light Extraction Efficiency (%)

For each sintered body, the product of the measured relative luminous flux and the illumination efficiency was calculated as the light extraction efficiency. The light extraction efficiency of the sintered body according to Comparative Example 1 was defined as 100%, and the ratio of the light extraction efficiency of the sintered body according to each of Examples and Comparative Examples to the light extraction efficiency of the sintered body according to Comparative Example 1 was expressed as a relative light extraction efficiency (%).

SEM Micrograph

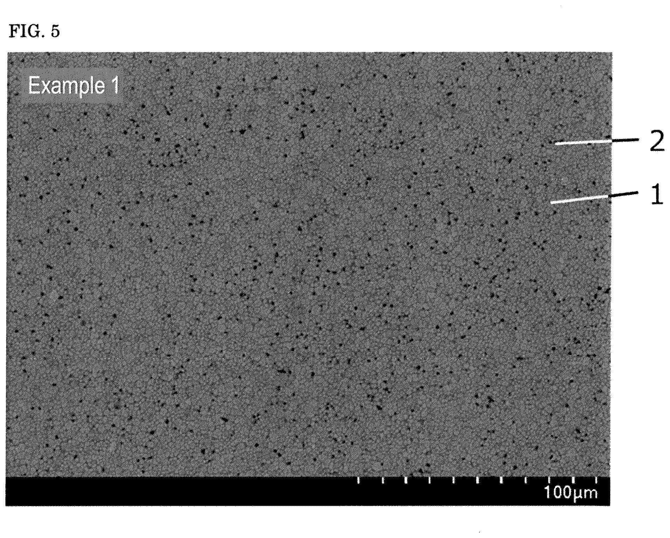

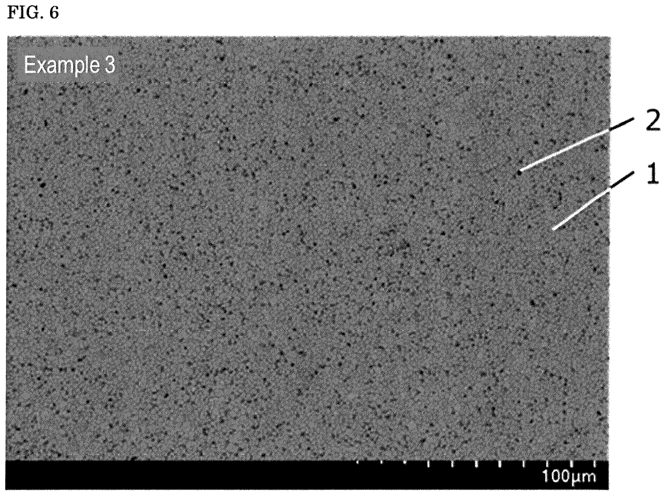

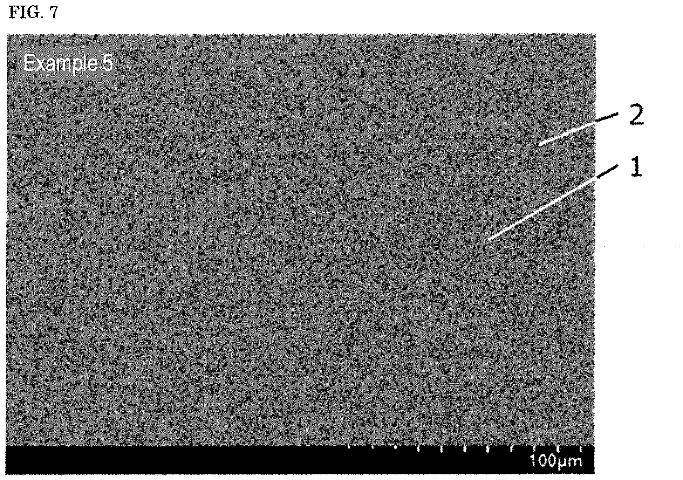

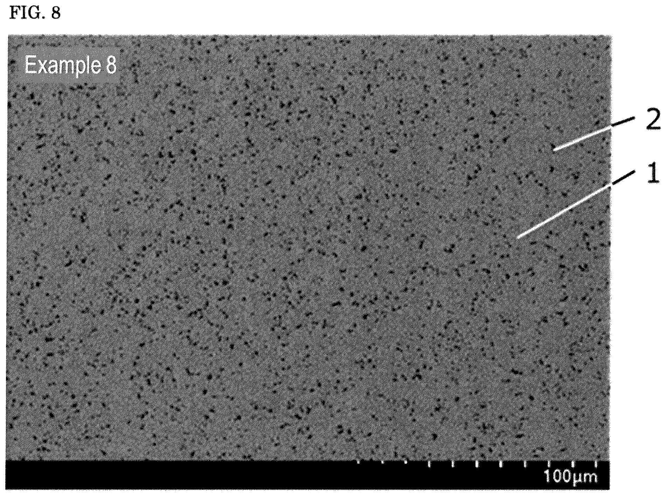

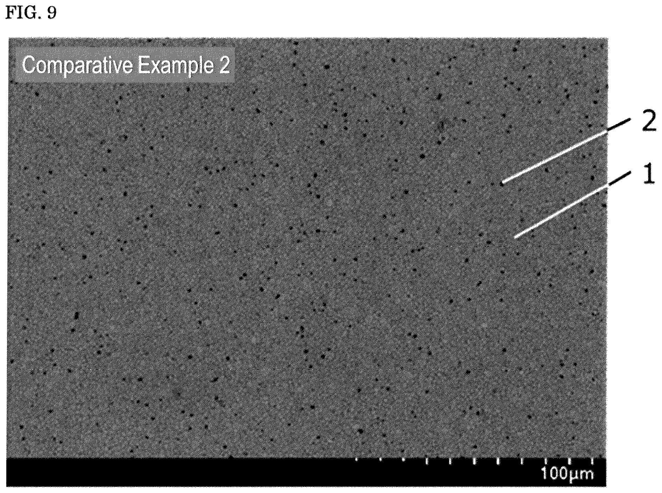

A scanning electron microscope (SEM) was used to obtain an SEM micrograph of the surface of each sintered body. The SEM micrographs shown in the drawings were micrographs obtained at a magnification of 500 times, and the SEM micrographs used for measuring the maximum length were micrographs obtained at a magnification of 2,000 times in consideration of the accuracy of the analysis. FIG. 5 shows an SEM micrograph of the surface of the sintered body according to Example 1. FIG. 6 shows an SEM micrograph of the surface of the sintered body according to Example 3. FIG. 7 shows an SEM micrograph of the surface of the sintered body according to Example 5. FIG. 8 shows an SEM micrograph of the surface of the sintered body according to Example 8. FIG. 9 shows an SEM micrograph of the surface of the sintered body according to Comparative Example 2.

Area Ratio of Aluminum Oxide Phase

In the SEM micrographs obtained by photographing the surface or the cross section of the sintered body according to each of Examples and Comparative Examples using an SEM, the total area of the aluminum oxide phase was measured using a Winroof 2018 image analysis software device (manufactured by Mitani Corp.), and the area ratio was calculated assuming that the measurement area on the surface or the cross section of the sintered body was 100 area%. The measurement area on the surface or the cross section of the sintered body means the same as the 100 area% of the total of the rare earth aluminate crystal phase and the aluminum oxide phase. Furter, in the sintered body, a similar aluminum oxide phase is present also in the thickness direction, and thus the volume ratio of the aluminum oxide phase in the sintered body and the area ratio of the aluminum oxide phase in the sintered body are approximated in numerical value.

Volume Ratio of Aluminum Oxide Phase (Calculated from Target Composition)

The mass ratio of each element was calculated from the molar ratio and the atomic weight of each element in the target composition of the rare earth element $R^1$, Ce, Al, Ga, and optionally contained Sc, which were contained in the raw material mixture constituting the sintered body according to each of Examples and Comparative Examples. Using the true densities of the rare earth aluminate crystal phase and the aluminum oxide phase, the total volume of the sintered body were calculated from the target composition of the raw material mixture constituting the sintered body. The molar ratio of excess Al beyond the molar ratio of Al constituting the yttrium aluminum garnet structure contained in the raw material mixture was calculated. It is presumed that, because the molar ratio of Al in the composition constituting the yttrium aluminum garnet structure is 5, if the total molar ratio of Al, Ga, and optionally contained Sc exceeds 5, the value by which the total molar ratio exceeds 5 is the value of the excess Al, and the excess Al forms an aluminum oxide phase separated from the rare earth aluminate crystal phase. From the molar ratio of the excess Al, the volume of Al in terms of oxide ($Al_2O_3$) was calculated based on the atomic weight and density of Al. The ratio of the volume of Al in terms of oxide to the total volume of the sintered body being 100% by volume was calculated as a volume ratio of the aluminum oxide phase. For the atomic weight of each element constituting the sintered body, the numerical values described in the periodic table were used. For the true densities of the rare earth aluminate crystal phase and the aluminum oxide phase, the true density values used when calculating the relative density were used.

Volume Ratio of Aluminum Oxide Phase (Calculated from Analysis Value of Sintered Body)

The sintered body was melted in an alkaline solution, then placed in a hydrochloric acid solution, and heated from 40°C to 100°C to prepare a sample solution in which the sintered body was dissolved. The sample solution was subjected to compositional analysis of each element contained in the sintered body using an inductively coupled plasma atomic emission spectrometer (ICP-AES) (Optima 8300, manufactured by PerkinElmer Inc.). From the molar ratio of each element obtained by the analysis, the volume of Al in terms of oxide ($Al_2O_3$) was calculated based on the atomic weight and density of Al. Assuming that the total volume of the sintered body was 100% by volume, the ratio of the volume of Al in terms of oxide to the total volume of the sintered body was calculated as a volume ratio of the aluminum oxide phase. For the atomic weight and the true density of each element, the same values as those used when calculating the volume ratio of the aluminum oxide phase from the molar ratio of the target composition were used.

Al Content (% by Mass) and Ga content (% by Mass) (Calculated from Target Composition)

The Al content (% by mass) and the Ga content (% by mass) contained in the raw material mixture constituting the sintered body according to each of Examples and Comparative Examples were calculated from the target composition. Specifically, the molar ratios of Al and Ga in the target composition were multiplied by the atomic weight of Al and Ga, respectively; the mass of the sintered body was calculated from the molar ratio of each element contained in the target composition constituting the sintered body and the atomic weight of each element; and the Al content (% by mass) and the Ga content (% by mass) were calculated assuming that the mass of the sintered body was 100% by mass.

Al Content (% by Mass) and Ga content (% by Mass) (Calculated from Analysis Value of Sintered Body)

The Al content (% by mass) and the Ga content (% by mass) contained in the sintered body according to each of Examples and Comparative Examples were calculated from the compositional analysis of each element contained in the sintered body for the above sample solution using an inductively coupled plasma atomic emission spectrometer (ICP-AES) (Optima 8300, manufactured by PerkinElmer Inc.). Specifically, the molar ratios of Al and Ga obtained by the compositional analysis were multiplied by the atomic weight of Al and Ga, respectively; the mass of the sintered body was calculated from the molar ratio of each element contained in the analysis composition of the sintered body and the atomic weight of each element; and the Al content (% by mass) and the Ga content (% by mass) were calculated assuming that the mass of the sintered body was 100% by mass.

Absolute Maximum Length Measurement Method

In the SEM micrographs obtained by photographing the surface or the cross section of the sintered body according to each of Examples and Comparative Examples using an SEM, the region having an area of 3,024 $\mu m^2$ was defined as a measurement range. In the example herein, the data size of each SEM micrograph was 960 $\times$ 1,280 (vertical $\times$ lateral) pixels and one pixel was 0.04960938 $\mu$m, and the area of the measurement range was thus calculated as 47.6 $\mu$m $\times$ 63.5 pm, resulting in 3,024 $\mu m^2$. The distance between the two most distant points of the contour of a rare earth aluminate crystal phase included in the measurement range was measured as an absolute maximum length of the rare earth aluminate crystal phase using a Winroof 2018 image analysis software device (manufactured by Mitani Corp.). In addition, the distance between the two most distant points of the contour of an aluminum oxide phase (black dots on the SEM micrograph) was measured as an absolute maximum length of the aluminum oxide phase using the image analysis software device. The absolute maximum lengths of 10 or more and 10,000 or less, more specifically 1,000 or more and 8,000 or less rare earth aluminate crystal phases or aluminum oxide phases on the measurement area were measured to calculate the minimum value, the maximum value, the arithmetic average value, and the standard deviation. The results are shown in Table 4.

Table 1

| | Target composition | | | | | | | |
|---|---|---|---|---|---|---|---|---|
| | Rare earth element | | Ce | Total of Ce and rare earth element | Al | Ga | Total value of Al and Ga | Volume ratio of aluminum oxide phase (%by volume) |
| | Type | Parameter 1-m | Parameter m | | Parameter P | Parameter n | Parameter k | |
| Example 1 | Y | 0.997 | 0.003 | 3 | 0.62 | 0.38 | 5.30 | 2.8 |
| Example 2 | Y | 0.997 | 0.003 | 3 | 0.64 | 0.36 | 5.50 | 4.5 |
| Example 3 | Y | 0.997 | 0.003 | 3 | 0.65 | 0.35 | 5.70 | 6.2 |
| Example 4 | Y | 0.997 | 0.003 | 3 | 0.67 | 0.33 | 6.00 | 8.6 |
| Example 5 | Y | 0.997 | 0.003 | 3 | 0.71 | 0.29 | 7.00 | 15.9 |
| Example 6 | Y | 0.997 | 0.003 | 3 | 0.76 | 0.24 | 8.33 | 24.0 |
| Example 7 | Y | 0.997 | 0.003 | 3 | 0.89 | 0.11 | 18.33 | 55.8 |
| Example 8 | Y | 0.997 | 0.003 | 3 | 0.73 | 0.27 | 5.50 | 4.5 |
| Example 9 | Y | 0.997 | 0.003 | 3 | 0.67 | 0.33 | 7.50 | 17.6 |
| Example 10 | Y | 0.997 | 0.003 | 3 | 0.80 | 0.20 | 12.50 | 35.3 |
| Comparative Example 1 | Lu | 0.996 | 0.004 | 3 | 1.00 | 0.00 | 5.00 | |
| Comparative Example 2 | Y | 0.997 | 0.003 | 3 | 0.60 | 0.40 | 5.00 | 0.0 |
| Comparative Example 3 | Y | 0.997 | 0.003 | 3 | 0.61 | 0.39 | 5.10 | 0.9 |

EP 4 442 669 A1

20

Table 2

| | Sintered body | | | | | | | | | |
|---|---|---|---|---|---|---|---|---|---|---|
| | Volume ratio of aluminum oxide phase (%by volume) | Area ratio of aluminum oxide phase (area%) | Relative density (%) | Chromaticity coordinates | | Relative luminous flux (%) | Relative light diameter ratio | Illumination efficiency (%) | Relative light extraction efficiency (%) | Light emission peak wavelength (nm) |
| | | | | x value | y value | | | | | |
| Example 1 | 3.4 | 3.1 | 98.8 | 0.353 | 0.595 | 101.5 | 109.7 | 58.0 | 99.4 | 526 |
| Example 2 | 5.1 | 4.3 | 98.5 | 0.354 | 0.594 | 102.2 | 104.2 | 58.7 | 101.3 | 526 |
| Example 3 | - | 5.1 | 98.8 | 0.356 | 0.594 | 106.3 | 117.0 | 56.9 | 102.2 | 533 |
| Example 4 | - | 9.8 | 98.1 | 0.357 | 0.594 | 106.7 | 112.8 | 57.5 | 103.7 | 533 |
| Example 5 | 16.4 | 19.5 | 98.2 | 0.363 | 0.591 | 112.8 | 125.5 | 55.5 | 105.7 | 526 |
| Example 6 | 24.6 | 27.1 | 97.6 | 0.369 | 0.588 | 115.3 | 132.9 | 54.1 | 104.5 | 533 |
| Example 7 | 56.4 | 60.0 | 98.4 | 0.377 | 0.583 | 108.6 | 121.4 | 56.2 | 100.5 | 533 |
| Example 8 | 5.1 | 5.6 | 98.2 | 0.366 | 0.590 | 107.2 | 108.1 | 58.2 | 105.4 | 533 |
| Example 9 | - | 25.8 | 98.7 | 0.357 | 0.593 | 107.2 | 124.3 | 55.7 | 100.8 | 526 |
| Example 10 | - | 51.1 | 97.2 | 0.371 | 0.586 | 111.1 | 120.3 | 56.4 | 105.8 | 533 |
| Comparative Example 1 | - | - | 97.9 | 0.343 | 0.606 | 100.0 | 100.0 | 59.2 | 100.0 | 526 |
| Comparative Example 2 | - | 1.1 | 98.9 | 0.348 | 0.597 | 100.8 | 110.0 | 57.9 | 98.7 | 523 |
| Comparative Example 3 | 1.8 | 1.5 | 99.1 | 0.351 | 0.596 | 100.5 | 116.7 | 57.0 | 96.7 | 526 |

Table 3

| | Ga content (% by mass) | | Al content (% by mass) | |
|---|---|---|---|---|
| | Target composition | Analysis composition | Target composition | Analysis composition |
| Example 1 | 20.3 | 20.4 | 12.9 | 13.1 |
| Example 2 | 20.1 | 20.2 | 13.6 | 13.8 |
| Example 3 | 20.0 | - | 14.3 | - |
| Example 4 | 19.7 | - | 15.3 | - |
| Example 5 | 19.0 | 18.9 | 18.4 | 18.6 |
| Example 6 | 18.1 | - | 27.7 | - |
| Example 7 | 13.4 | 13.3 | 43.4 | 42.9 |
| Example 8 | 15.6 | 15.5 | 16.1 | 16.3 |
| Example 9 | 22.7 | - | 17.6 | - |
| Example 10 | 19.3 | - | 29.9 | - |
| Comparative Example 1 | - | - | - | - |
| Comparative Example 2 | 20.5 | - | 11.9 | - |
| Comparative Example 3 | 20.4 | 20.5 | 12.3 | 12.5 |

Table 4

| | Aluminum oxide phase Absolute maximum length (μm) | | | | Rare earth aluminate crystal phase Absolute maximum length (μm) | | | |
|---|---|---|---|---|---|---|---|---|
| | Maximum value | Minimum value | Average value | Standard deviation | Maximum value | Minimum value | Average value | Standard deviation |
| Example 1 | 2.0 | 0.5 | 1.0 | 0.38 | 5.5 | 1.0 | 2.1 | 0.78 |
| Example 2 | 2.9 | 0.8 | 1.4 | 0.42 | 6.2 | 1.0 | 2.1 | 0.75 |
| Example 3 | 2.8 | 0.8 | 1.3 | 0.35 | 6.0 | 1.0 | 2.0 | 0.68 |
| Example 4 | 2.8 | 0.4 | 1.2 | 0.47 | 4.3 | 1.0 | 1.9 | 0.61 |
| Example 5 | 3.0 | 0.2 | 1.3 | 0.71 | 4.5 | 1.0 | 2.0 | 0.66 |
| Example 6 | 3.0 | 0.5 | 1.1 | 0.49 | 3.8 | 1.0 | 1.8 | 0.55 |
| Example 7 | 2.7 | 0.2 | 0.8 | 0.50 | 2.1 | 1.0 | 1.3 | 0.24 |
| Example 8 | 2.7 | 0.4 | 1.1 | 0.52 | 4.3 | 1.0 | 1.8 | 0.59 |
| Example 9 | 2.9 | 0.6 | 1.5 | 0.51 | 5.0 | 1.0 | 2.0 | 0.66 |
| Example 10 | 3.0 | 0.2 | 0.9 | 0.67 | 4.3 | 1.0 | 1.7 | 0.46 |
| Comparative Example 1 | 1.8 | 0.2 | 0.4 | 0.15 | 2.0 | 0.5 | 0.9 | 0.24 |
| Comparative Example 2 | 1.7 | 0.8 | 1.2 | 0.25 | 5.7 | 1.0 | 2.0 | 0.67 |
| Comparative Example 3 | 1.8 | 0.8 | 1.3 | 0.28 | 6.7 | 1.0 | 2.3 | 0.82 |

EP 4 442 669 A1

In the sintered bodies according to Examples 1 to 10, the light emission peak wavelength and the chromaticity coordinates (x value, and y value) are not significantly different from that of the sintered body according to Comparative Example 1, and even when lutetium (Lu) was not contained as the rare earth element $R^1$, light having a color similar to that of the rare earth aluminate crystal phase containing lutetium in the composition was emitted. The sintered bodies according to Examples 1 to 10 each satisfied the followings in the target composition of the raw material mixture in the method for producing a sintered body: when the total molar ratio of the rare earth element $R^1$ and Ce was 3, the total molar ratio of Al and Ga was the value of the parameter k being more than 5.25 and less than 19, the molar ratio of Al was the value of the product of the parameter p being 0.61 or more and 0.90 or less and the parameter k, and the molar ratio of Ga was the value of the product of the parameter n being 0.10 or more and 0.39 or less and the parameter k.

The sintered bodies according to Examples 1 to 10 each emitted light having a color similar to that of the sintered body according to Comparative Example 1, and had good relative luminous flux. The sintered bodies according to Examples 2 to 10 each had good relative light extraction efficiency compared to the sintered body according to Comparative Example 1. The excess Al beyond the Al required to form a rare earth aluminate crystal phase having an yttrium aluminum garnet structure forms an aluminum oxide phase together with oxygen. Therefore, in the sintered bodies according to Examples 2 to 10, the irradiated light is scattered by the aluminum oxide phase in the sintered body, which facilitates absorption of light by the rare earth aluminate crystal phase and thus facilitates wavelength conversion, so that the luminous flux and the light extraction efficiency of the wavelength-converted light can be increased while maintaining the illumination efficiency of the light emitted from the sintered body.

The sintered body according to Example 1 had a smaller amount of the excess Al beyond the Al required to form a rare earth aluminate crystal phase having an yttrium aluminum garnet structure. Therefore, it is assumed that the aluminum oxide phase formed in the sintered body was small and the irradiated light was not sufficiently scattered in the sintered body, and thus the relative light extraction efficiency thereof was lower than that of the sintered body according to Comparative Example 1.

The sintered body according to Comparative Example 2 contained a rare earth aluminate crystal phase containing yttrium instead of lutetium in the composition, and had the light emission peak wavelength shifted to the short wavelength side compared to the sintered body according to Comparative Example 1.

The sintered body according to Comparative Example 3 had a smaller amount of the excess Al beyond the Al required to form a rare earth aluminate crystal phase having an yttrium aluminum garnet structure. Therefore, the aluminum oxide phase formed in the sintered body was small and the irradiated light was not sufficiently scattered in the sintered body, and thus the relative light extraction efficiency thereof was lower than that of the sintered body according to Comparative Example 1.

In the sintered bodies according to Examples 1 to 10, the Ga content calculated from the target composition was 13% by mass or more and 23% by mass or less relative to the total amount of the sintered body, and the measured value of the Ga content calculated from the analysis value was also 13% by mass or more and 23% by mass or less. In the sintered bodies according to Examples 1 to 10, the Al content calculated from the target composition was 12% by mass or more and 45% by mass or less, and the measured value of the Al content calculated from the analysis value was also 12% by mass or more and 45% by mass or less.

In each of the sintered bodies according to Examples 1 to 10, an average value of the absolute maximum length (average absolute maximum length) of the rare earth aluminate crystal phase was 1.0 μm or more and 4.0 μm or less, more specifically 1.3 μm or more and 2.1 μm or less. In each of the sintered bodies according to Examples 1 to 10, a maximum value of the absolute maximum length of the rare earth aluminate crystal phase was 1.5 μm or more and 7.5 μm or less, more specifically 2.1 μm or more and 6.0 μm or less. In each of the sintered bodies according to Examples 1 to 10, a minimum value of the absolute maximum length of the rare earth aluminate crystal phase was 0.1 μm or more and 2.0 μm or less, more specifically 0.5 μm or more and 1.0 μm or less. In each of the sintered bodies according to Examples 1 to 10, a standard deviation of the average absolute maximum length of the rare earth aluminate crystal phase was 0.10 μm or more and 0.90 μm or less, more specifically 0.24 μm or more and 0.78 μm or less, indicating a small variation.

In each of the sintered bodies according to Examples 1 to 10, an average value of the absolute maximum length (average absolute maximum length) of the aluminum oxide phase was 0.1 μm or more and 2.5 μm or less, more specifically 0.8 μm or more and 1.5 μm or less. In each of the sintered bodies according to Examples 1 to 10, a maximum value of the absolute maximum length of the aluminum oxide phase was 1.0 μm or more and 4.0 μm or less, more specifically 2.0 μm or more and 3.0 μm or less. In each of the sintered bodies according to Examples 1 to 10, a minimum value of the absolute maximum length of the aluminum oxide phase was 0.1 μm or more and 2.0 μm or less, more specifically 0.2 μm or more and 0.8 μm or less. In each of the sintered bodies according to Examples 1 to 10, a standard deviation of the average absolute maximum length of the aluminum oxide phase was 0.10 μm or more and 0.90 μm or less, more specifically 0.35 μm or more and 0.71 μm or less, indicating a small variation.

In each of the sintered bodies according to Examples 1 to 10, the average absolute maximum length of the aluminum oxide phase was relatively smaller than the average absolute maximum length of the rare earth aluminate crystal phase.

FIG. 5 shows an SEM micrograph of the surface of the sintered body according to Example 1. FIG. 6 shows an SEM micrograph of the surface of the sintered body according to Example 3. FIG. 7 shows an SEM micrograph of the surface of the sintered body according to Example 5. FIG. 8 shows an SEM micrograph of the surface of the sintered body according to Example 8. In the sintered bodies according to Examples 1, 3, and 5, an amount of excess Al beyond the Al required to form a rare earth aluminate crystal phase having an yttrium aluminum garnet structure was increased in the numerical order of the Examples, and it was observed that black portions representing the aluminum oxide phase contained in the sintered body increased as the amount of the excess Al increased. As shown in FIGS. 5 to 8, on the surface of each sintered body, the black portions representing the aluminum oxide phase were almost uniformly dispersed in the sintered body. The sintered body according to Example 8 shown in FIG. 8 had fewer black areas representing the aluminum oxide phase compared to the sintered body according to Example 5 due to reduction in the amount of the excess Al beyond the Al required to form a rare earth aluminate crystal phase having an yttrium aluminum garnet structure.

FIG. 9 shows an SEM micrograph of the surface of the sintered body according to Comparative Example 2. In the sintered body according to Comparative Example 2, while there is no excess Al beyond the Al required to form a rare earth aluminate crystal phase having an yttrium aluminum garnet structure, and the molar ratio of Al was the same value as the molar ratio of the theoretical composition of the rare earth aluminate, black portions representing the aluminum oxide phase were observed in the sintered body, and a trace amount of the aluminum oxide phase was formed.

The sintered body according to the present disclosure can be used, in combination with an excitation light source, as a wavelength conversion member for lighting devices for vehicles and general lighting, backlights for liquid crystal display devices, and light sources for projectors.

**Claims**

1. A method for producing a sintered body comprising:

   providing a raw material mixture containing

   oxide particles containing a rare earth element $R^1$ being at least one element selected from the group consisting of Y, La, Gd, and Tb,
   Ce-containing oxide particles containing Ce,
   Al-containing oxide particles containing Al,
   Ga-containing oxide particles containing Ga, and
   optionally Sc-containing oxide particles containing Sc,

   to obtain a target composition in which a total molar ratio of $R^1$ and Ce is 3, a molar ratio of Ce is a product of 3 and a parameter m, the parameter m being 0.001 or more and 0.017 or less, a total molar ratio of Al, Ga, and the optionally contained Sc is a parameter k, the parameter k being more than 5.25 and less than 19, a molar ratio of Al is a product of a parameter p and the parameter k, the parameter p being 0.61 or more and 0.90 or less, and a molar ratio of Ga is a product of a parameter n and the parameter k, the parameter n being 0.10 or more and 0.39 or less;
   molding the raw material mixture to obtain a molded body; and
   calcining the molded body at a temperature of 1,300°C or higher and 1,800°C or lower to obtain a sintered body containing a rare earth aluminate crystal phase and an aluminum oxide phase,
   wherein the sintered body contains 2.7% by volume or more and 57.0% by volume or less of the aluminum oxide phase.

2. The method for producing a sintered body according to claim 1, wherein, the target composition is represented by the following formula (I):

$$(R^1{}_{1-m}Ce_m)_3(Al_pGa_nSc_q)_kO_{4.5+1.5k} \qquad (I),$$

   wherein $R^1$ represents at least one selected from Y, La, Gd, and Tb, and k, m, n, p, and q satisfy $5.25 < k < 19$, $0.001 \leq m \leq 0.017$, $0.10 \leq n \leq 0.39$, $0.61 \leq p \leq 0.90$, $0 \leq q \leq 0.02$, and p+n+q = 1.

3. The method for producing a sintered body according to claim 2, wherein in the formula (I), $0.16 \leq n \leq 0.39$ and $0.61 \leq p \leq 0.84$.

4. The method for producing a sintered body according to any one of claims 1 to 3, wherein, the sintered body obtained in the obtaining of the sintered body is configured to, upon irradiation with a first light having an energy density that is 34.0 W/mm$^2$ and a first light emission peak wavelength that is 450 nm, emit a second light having a second light emission peak wavelength that is 500 nm or more and less than 650 nm.

5. The method for producing a sintered body according to any one of claims 1 to 4, wherein, the sintered body obtained in the obtaining of the sintered body is configured to, upon irradiation with a first light having an energy density that is 34.0 W/mm$^2$ and a light emission peak wavelength that is 450 nm, emit a second light having chromaticity coordinates of the CIE (Commission Internationale de l'Eclairage) chromaticity diagram with an x value that is 0.340 or more and 0.380 or less and a y value that is 0.580 or more and 0.610 or less.

6. The method for producing a sintered body according to any one of claims 1 to 5, wherein, a surface or a cross section of the sintered body obtained in the obtaining of the sintered body comprises 2.7 area% or more and 62.0 area% or less of the aluminum oxide phase relative to the surface or the cross section being 100 area%.

7. The method for producing a sintered body according to any one of claims 1 to 6,

wherein, in providing the raw material mixture, a specific surface area of the oxide particles containing a rare earth element R$^1$, a specific surface area of the Ce-containing oxide particles, a specific surface area of the Al-containing oxide particles, a specific surface area of the Ga-containing oxide particles, and a specific surface area of the Sc-containing oxide particles each are 1.0 m$^2$/g or more and 130.0 m$^2$/g or less as measured by a BET method,
wherein, an absolute maximum length of the aluminum oxide phase is 0.01 $\mu$m or more and less than 10.0 pm, and an absolute maximum length of the rare earth aluminate crystal phase is 0.01 $\mu$m or more and less than 10.0 pm, as measured under the following measurement condition, on a surface or a cross section of the sintered body obtained in the obtaining of the sintered body, and
wherein the absolute maximum length is measured as a distance between two most distant points of the contour of the aluminum oxide phase or the rare earth aluminate crystal phase included in a measurement range on the surface or the cross section of the sintered body.

8. A sintered body comprising:

a rare earth element R$^1$ being at least one selected from the group consisting of Y, La, Gd, and Tb;
Ce;
Al;
Ga; and
optionally Sc,
the sintered body comprising a rare earth aluminate crystal phase and an aluminum oxide phase,
wherein the sintered body contains 13% by mass or more and 23% by mass or less of Ga relative to a total mass of the sintered body, and
wherein the sintered body contains 2.7% by volume or more and 57.0% by volume or less of the aluminum oxide phase relative to a total volume of the sintered body.

9. The sintered body according to claim 8, wherein the sintered body contains 2.7% by volume or more and less than 30% by volume of the aluminum oxide phase relative to a total volume of the sintered body.

10. The sintered body according to claim 8 or 9, wherein the sintered body has a composition in which:

a total molar ratio of R$^1$ and Ce is 3,
a molar ratio of Ce is a product of 3 and a parameter m, the parameter m being 0.001 or more and 0.017 or less,
a total molar ratio of Al, Ga, and the optionally contained Sc is a parameter k being more than 5.25 and less than 19,
a molar ratio of Al is a product of a parameter p, being 0.61 or more and 0.90 or less, and the parameter k, and
a molar ratio of Ga is a product of a parameter n, being 0.10 or more and 0.39 or less, and the parameter k.

11. The sintered body according to any one of claims 8 to 10, wherein the sintered body is configured to, by irradiation with light having an energy density of 34.0 W/mm$^2$ and a light emission peak wavelength of 450 nm, convert a wavelength of the irradiated light and then to emit light having a light emission spectrum with a light emission peak wavelength of 500 nm or more and less than 650 nm.

FIG. 1

Providing Raw Material Mixture ～S101

Molding Raw Material Mixture
    to Obtain Molded Body ～S102

Calcining Molded Body
    to Obtain Sintered Body ～S103

FIG. 2

FIG. 3

FIG. 4

FIG. 5

FIG. 6

FIG. 7

FIG. 8

FIG. 9

Europäisches
Patentamt

European
Patent Office

Office européen
des brevets

# EUROPEAN SEARCH REPORT

**Application Number**

EP 24 15 8764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/245118 A1 (MOTEKI JUN [JP] ET AL) 8 August 2019 (2019-08-08) * ex.41-43; table 1, para.[0026] & [0027] * | 1-11 | INV. C04B35/117 C04B35/44 C04B35/638 C04B35/64 C09K11/08 C04B35/01 |
| X | US 2020/303597 A1 (TAKAKU SYOHEI [JP] ET AL) 24 September 2020 (2020-09-24) * example 1, table 3, para.[0031] & [0095] * | 1-11 | |
| X | JP 2019 182730 A (NICHIA KAGAKU KOGYO KK) 24 October 2019 (2019-10-24) * examples, table, claim 5, para.[0039] * | 8-11 | |
| A | | 1-7 | |
| X | US 10 665 761 B2 (NGK SPARK PLUG CO [JP]) 26 May 2020 (2020-05-26) * example 6: samples 57-59, tables 1 & 2 * | 1-11 | |

TECHNICAL FIELDS SEARCHED (IPC)

C04B
H05B
C09K

The present search report has been drawn up for all claims

| Place of search | Date of completion of the search | Examiner |
|---|---|---|
| Munich | 28 August 2024 | Munro, Brian |

EPO FORM 1503 03.82 (P04C01)

## ANNEX TO THE EUROPEAN SEARCH REPORT
## ON EUROPEAN PATENT APPLICATION NO.

EP 24 15 8764

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2024

| Patent document cited in search report | | Publication date | Patent family member(s) | | Publication date |
|---|---|---|---|---|---|
| US 2019245118 | A1 | 08-08-2019 | CN | 109891274 A | 14-06-2019 |
| | | | EP | 3534190 A1 | 04-09-2019 |
| | | | KR | 20190041022 A | 19-04-2019 |
| | | | TW | 201823632 A | 01-07-2018 |
| | | | US | 2019245118 A1 | 08-08-2019 |
| | | | WO | 2018079419 A1 | 03-05-2018 |
| US 2020303597 | A1 | 24-09-2020 | CN | 111133343 A | 08-05-2020 |
| | | | EP | 3690497 A1 | 05-08-2020 |
| | | | JP | 7120745 B2 | 17-08-2022 |
| | | | JP | 2019066632 A | 25-04-2019 |
| | | | KR | 20200042933 A | 24-04-2020 |
| | | | TW | 201920608 A | 01-06-2019 |
| | | | US | 2020303597 A1 | 24-09-2020 |
| | | | WO | 2019065175 A1 | 04-04-2019 |
| JP 2019182730 | A | 24-10-2019 | JP | 7140968 B2 | 22-09-2022 |
| | | | JP | 2019182730 A | 24-10-2019 |
| US 10665761 | B2 | 26-05-2020 | CN | 109716178 A | 03-05-2019 |
| | | | EP | 3534192 A1 | 04-09-2019 |
| | | | JP | 6449963 B2 | 09-01-2019 |
| | | | JP | 2018077463 A | 17-05-2018 |
| | | | KR | 20190031531 A | 26-03-2019 |
| | | | TW | 201823633 A | 01-07-2018 |
| | | | US | 2019198726 A1 | 27-06-2019 |

EPO FORM P0459

For more details about this annex : see Official Journal of the European Patent Office, No. 12/82

**REFERENCES CITED IN THE DESCRIPTION**

**Patent documents cited in the description**

- JP 2023030183 A
- JP 2017197774 A